# EUROPEAN PATENT APPLICATION

(11) **EP 4 808 142 A1**
(43) Date of publication of application: **16.09.2026**
(21) Application number: 26164551.9
(22) Date of filing: 13.03.2026
(51) Int. Cl.: H04N 25/46, H04N 25/773, H04N 25/704

(54) **PHOTOELECTRIC CONVERSION DEVICE, PHOTODETECTION SYSTEM, MOVABLE OBJECT, AND EQUIPMENT**

(30) Priority: 14.03.2025 JP 2025041062
(71) Applicant: Canon Kabushiki Kaisha, Tokyo 146-8501 (JP)
(72) Inventor: OTA, Yasuharu, Ohta-ku, Tokyo, 146-8501 (JP)
(74) Representative: TBK

(57) **Abstract**

A photoelectric conversion device (100) includes a first photon detection circuit (24A) and a second photon detection circuit (24B) each of which outputs a pulse signal in response to incidence of a photon, a first counter (34A) configured to count the pulse signal output from the first photon detection circuit (24A), a second counter (34B) configured to count the pulse signal output from the second photon detection circuit (24B), a selector (35) connected to the first counter (34A) and the second counter (34B) and configured to sequentially output a first count value of the first counter (34A) and a second count value of the second counter (34B), and an output circuit (36) connected to the selector (35) and configured to control an output of the first count value and the second count value input from the selector (35) to an output line (16).

## Description

### TECHNICAL FIELD

The present disclosure relates to a photoelectric conversion device, a photodetection system, a movable object, and an equipment.

### BACKGROUND

Japanese Patent Laid-Open No. 2022-096472 describes a technique of setting an exposure period in a plurality of counting processing units according to an occurrence pattern of an event in which photons are incident, in a photoelectric conversion device including a plurality of counting processing units arranged in parallel with a photoelectric conversion unit.

### SUMMARY

However, in the configuration described in Japanese Patent Laid-Open No. 2022-096472, pixel output lines corresponding to the number of bits of a signal output from a plurality of counting processing units are necessary, and these pixel output lines may not be arranged within a desired pixel pitch. Although it is conceivable to narrow the interconnection width in order to arrange the pixel output lines within the desired pixel pitch, there is a possibility that the output resistance increases and the signal transfer time increases. In addition, since the number of output circuits of each pixel needs to be equal to the number of bits, there is a concern that the circuit area increases.

The present disclosure is directed to a technique for suppressing an increase in a circuit scale of a pixel circuit and an increase in a signal transfer time in a photoelectric conversion device including a plurality of counters in a pixel circuit.

The present disclosure in its first aspect provides a photoelectric conversion device as specified in claim 1. Optional features are specified in claims 2 to 14.

The present disclosure in its second aspect provides an equipment as specified in claim 15.

According to the present disclosure, in the photoelectric conversion device including the plurality of counters in the pixel circuit, it is possible to suppress an increase in the circuit scale of the pixel circuit and an increase in the signal transfer time.

Features of the present disclosure will become apparent from the following description of embodiments with reference to the attached drawings. The following description of embodiments is described by way of example.

### BRIEF DESCRIPTION OF THE DRAWINGS

Fig. 1 and Fig. 2 are block diagrams illustrating a configuration example of a photoelectric conversion device according to a first embodiment.
Fig. 3 is a block diagram illustrating a configuration example of a pixel circuit in the photoelectric conversion device according to the first embodiment.
Fig. 4 is a perspective view illustrating a configuration example of the photoelectric conversion device according to the first embodiment.
Fig. 5A, Fig. 5B, Fig. 5C, Fig. 6A, Fig. 6B, Fig. 6C, and Fig. 6D are diagrams illustrating the basic operation of a photon detection circuit in the photoelectric conversion device according to the first embodiment.
Fig. 7 is a timing chart illustrating a driving example of the photoelectric conversion device according to the first embodiment.
Fig. 8 is a block diagram illustrating a configuration example of a pixel region in a photoelectric conversion device according to a second embodiment.
Fig. 9 is a plan view of a photoelectric conversion unit in the photoelectric conversion device according to the second embodiment.
Fig. 10 is a plan view illustrating an arrangement example of color filters in the photoelectric conversion device according to the second embodiment.
Fig. 11 is a timing chart illustrating a driving example of the photoelectric conversion device according to the second embodiment.
Fig. 12 is a block diagram illustrating a configuration example of a pixel circuit in a photoelectric conversion device according to a third embodiment.
Fig. 13 is a plan view of a photoelectric conversion unit in a photoelectric conversion device according to the third embodiment.
Fig. 14 is a plan view illustrating an arrangement example of pixels and photoelectric conversion elements in the photoelectric conversion device according to the third embodiment.
Fig. 15 is a plan view illustrating an arrangement example of the pixels and counters in the photoelectric conversion device according to the third embodiment.
Fig. 16 is a plan view illustrating an arrangement example of counters, a selector, an output circuit, and output lines in the photoelectric conversion device according to the third embodiment.
Fig. 17 is a plan view illustrating another arrangement example of the pixels and the photoelectric conversion elements in the photoelectric conversion device according to the third embodiment.
Fig. 18 is a block diagram illustrating a configuration example of a pixel circuit in a photoelectric conversion device according to a fourth embodiment.
Fig. 19 is a plan view illustrating an arrangement example of pixels and counters in the photoelectric conversion device according to the fourth embodiment.
Fig. 20 is a plan view illustrating an arrangement example of counters, selectors, output circuits, and output lines in the photoelectric conversion device according to the fourth embodiment.
Fig. 21 is a block diagram illustrating a configuration example of a pixel circuit in a photoelectric conversion device according to a fifth embodiment.
Fig. 22 is a block diagram illustrating a configuration example of the pixel circuit in the photoelectric conversion device according to the fifth embodiment.
Fig. 23 is a block diagram illustrating a configuration example of the pixel circuit in the photoelectric conversion device according to the fifth embodiment.
Fig. 24 is a plan view illustrating an arrangement example of pixels and counters in the photoelectric conversion device according to the fifth embodiment.
Fig. 25 is a block diagram illustrating a schematic configuration of a photodetection system according to a sixth embodiment.
Fig. 26 is a block diagram illustrating a schematic configuration of a range image sensor according to a seventh embodiment.
Fig. 27 is a schematic diagram illustrating a configuration example of an endoscopic surgical system according to an eighth embodiment.
Fig. 28A, Fig. 28B, and Fig. 28C are schematic diagrams illustrating a configuration example of a movable object according to a ninth embodiment.
Fig. 29 is a block diagram illustrating a schematic configuration of a photodetection system according to the ninth embodiment.
Fig. 30 is a flowchart illustrating the operation of the photodetection system according to the ninth embodiment.
Fig. 31A and Fig. 31B are schematic diagrams illustrating a schematic configuration of a photodetection system according to a tenth embodiment.
Fig. 32 is a block diagram illustrating a schematic configuration of an equipment according to an eleventh embodiment.

### DESCRIPTION OF THE EMBODIMENTS

Hereinafter, embodiments of the present disclosure will be described in detail with reference to the accompanying drawings. The following embodiments are intended to embody the technical idea of the present disclosure and do not limit the technology of the present disclosure. Although a plurality of features is described in the embodiments, not all of the plurality of features are essential to the technology of the present disclosure, and the plurality of features may be arbitrarily combined.

In each of the embodiments described below, devices for imaging purposes will be mainly described as an example of a photoelectric conversion device. However, the embodiments are not limited to devices for imaging purposes and may be applied to other photoelectric conversion devices. For example, other examples of the photoelectric conversion device include a ranging device (a device for distance measurement and the like using a focus detection or a time of flight (TOF)), a photometric device (a device for measuring the amount of incident light), and the like.

In the following embodiments, connection between elements of a circuit may be described. In this case, even when another element is interposed between the elements of interest, the elements of interest are treated as being connected to each other unless otherwise specified. For example, it is assumed that an element A is connected to one node of a capacitor C having a plurality of nodes, and an element B is connected to the other node of the capacitor. Even in such a case, the element A and the element B are regarded as being connected to each other unless otherwise specified.

### First Embodiment

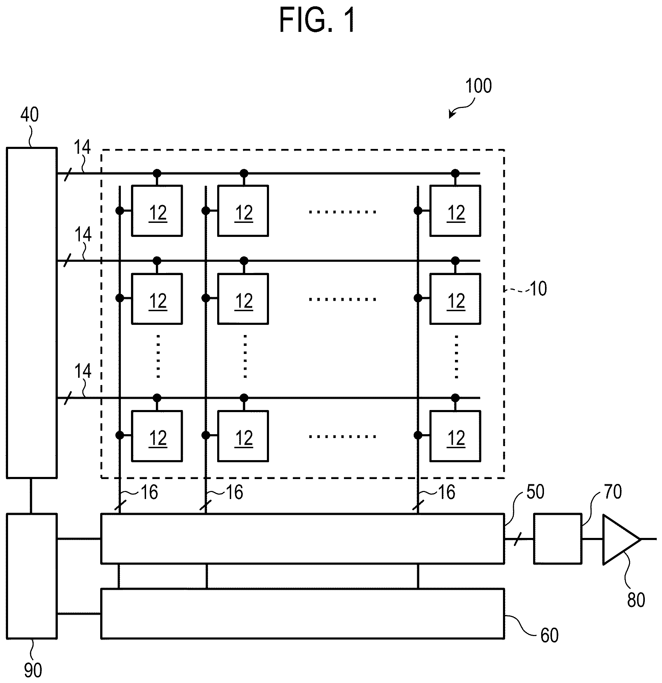

A schematic configuration of a photoelectric conversion device according to a first embodiment will be described with reference to Fig. 1. Fig. 1 is a block diagram illustrating a schematic configuration of a photoelectric conversion device according to the present embodiment.

As illustrated in Fig. 1, a photoelectric conversion device 100 according to the present embodiment includes a pixel region 10, a vertical scanning circuit unit 40, a readout circuit unit 50, a horizontal scanning circuit unit 60, a digital front end (DFE) 70, a transmitter circuit unit (TX) 80, and a control pulse generation unit 90.

The pixel region 10 is provided with a plurality of pixels 12 arranged in an array so as to form a plurality of rows and a plurality of columns. As described later, each of the plurality of pixels 12 may include a photoelectric conversion unit including a photoelectric conversion element and a signal processing unit that processes a signal output from the photoelectric conversion unit. The number of pixels 12 constituting the pixel region 10 is not particularly limited. For example, like a general digital camera, the pixel region 10 may be constituted by a plurality of pixels 12 arranged in an array of several thousand rows × several thousand columns. Alternatively, the pixel region 10 may include a plurality of pixels 12 arranged in one row or one column. Alternatively, one pixel 12 may constitute the pixel region 10. In addition, the pixel 12 may include a microlens and a color filter arranged on an optical path until incident light is guided to the photoelectric conversion element. The microlens focuses incident light on the photoelectric conversion element. The color filter selectively transmits light of a predetermined color.

In each row of the pixel array of the pixel region 10, a control line 14 is arranged so as to extend in a first direction (lateral direction in Fig. 1). Each of the control lines 14 is connected to the pixels 12 arranged in the first direction in the corresponding row, respectively, and forms a signal line common to these pixels 12. The first direction in which the control lines 14 extend may be referred to as a row direction or a horizontal direction. Each of the control lines 14 may include a plurality of signal lines for supplying a plurality of types of control signals to the pixels 12. The control line 14 of each row is connected to the vertical scanning circuit unit 40.

Further, in each column of the pixel array of the pixel region 10, an output line 16 is arranged so as to extend in a second direction (vertical direction in Fig. 1) intersecting the first direction. Each of the output lines 16 is connected to the pixels 12 arranged in the second direction in the corresponding column, respectively, and forms a signal line common to these pixels 12. The second direction in which the output lines 16 extend may be referred to as a column direction or a vertical direction. Each of the output lines 16 may include a plurality of signal lines.

The vertical scanning circuit unit 40 is a control circuit having a function of generating a control signal for driving the pixels 12 in response to a control signal output from the control pulse generation unit 90 and supplying the generated control signal to the pixels 12 via the control line 14. A logic circuit such as a shift register or an address decoder may be used as the vertical scanning circuit unit 40. The vertical scanning circuit unit 40 sequentially scans the pixels 12 in the pixel region 10 row by row to output the pixel signals of the pixels 12 to the readout circuit unit 50 via the output lines 16.

The output line 16 of each column is connected to the readout circuit unit 50. The readout circuit unit 50 includes a plurality of holding units (not illustrated) provided corresponding to each column of the pixel array of the pixel region 10 and has a function of holding the pixel signals of the pixels 12 of the respective columns output from the pixel region 10 in units of rows via the output lines 16 in the holding units of the corresponding columns.

The horizontal scanning circuit unit 60 is a control circuit having a function of generating a control signal for reading out a pixel signal from the holding unit of each column of the readout circuit unit 50 in response to a control signal output from the control pulse generation unit 90 and supplies the generated control signal to the readout circuit unit 50. A logic circuit such as a shift register or an address decoder may be used as the horizontal scanning circuit unit 60. The horizontal scanning circuit unit 60 sequentially scans the holding units of the respective columns of the readout circuit unit 50 to sequentially output the pixel signals held in the holding units to the DFE 70.

The DFE 70 is a signal processing circuit unit that performs predetermined digital signal processing on the pixel signal output from the readout circuit unit 50. The DFE 70 sequentially outputs the pixel signals subjected to the digital signal processing to the TX 80.

The TX 80 is a circuit unit for outputting the pixel signal output from the readout circuit unit 50 to the outside of the photoelectric conversion device 100 and includes an external interface circuit. The external interface circuit included in the TX 80 is not particularly limited. As the external interface circuit, for example, a SERializer/DESerializer (SerDes) transmission circuit may be applied. Examples of the SerDes transmission circuit include a low voltage differential signaling (LVDS) circuit and a scalable low voltage signaling (SLVS) circuit.

The control pulse generation unit 90 is a control circuit for generating control signals for controlling the operations and timings of the vertical scanning circuit unit 40, the readout circuit unit 50, and the horizontal scanning circuit unit 60, and supplying the generated control signals to each functional block. At least a part of the control signals for controlling the operations and timings of the vertical scanning circuit unit 40, the readout circuit unit 50, and the horizontal scanning circuit unit 60 may be supplied from the outside of the photoelectric conversion device 100.

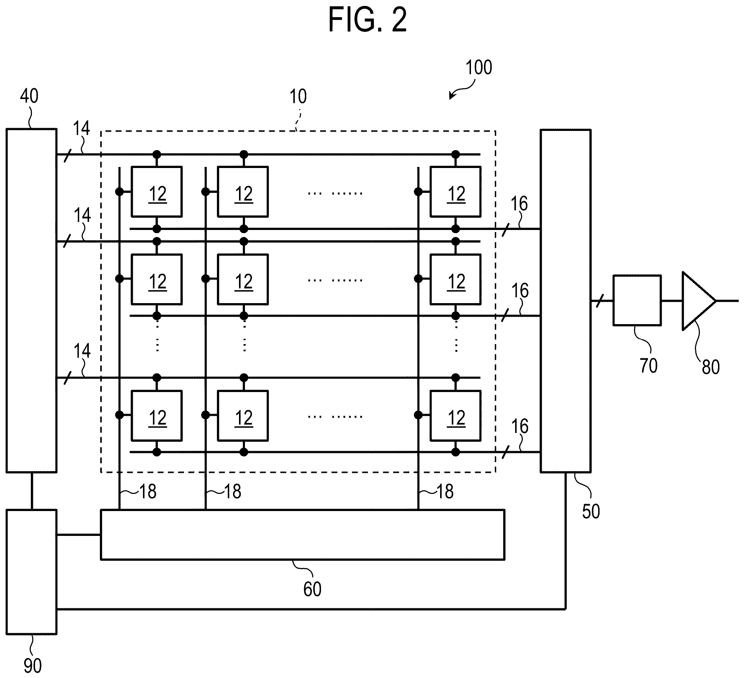

The connection mode of each functional block of the photoelectric conversion device 100 is not limited to the configuration example of Fig. 1 and may be configured as illustrated in, e.g., Fig. 2.

In the configuration example of Fig. 2, the output line 16 extending in the first direction is arranged in each row of the pixel array of the pixel region 10. Each of the output lines 16 is connected to the pixels 12 arranged in the first direction in the corresponding row, respectively, and forms a signal line common to these pixels 12. A control line 18 extending in the second direction is arranged in each column of the pixel array of the pixel region 10. Each of the control lines 18 is connected to the pixels 12 arranged in the second direction in the corresponding column, respectively, and forms a signal line common to these pixels 12.

The control line 18 of each column is connected to the horizontal scanning circuit unit 60. The horizontal scanning circuit unit 60 generates a control signal for reading out the pixel signal from the pixel 12 in response to a control signal output from the control pulse generation unit 90 and supplies the generated control signal to the pixel 12 via the control line 18. Specifically, the horizontal scanning circuit unit 60 sequentially scans the plurality of pixels 12 in the pixel region 10 in units of columns to output pixel signals of the pixels 12 in the respective rows belonging to the selected column to the output lines 16.

The output line 16 of each row is connected to the readout circuit unit 50. The readout circuit unit 50 includes a plurality of holding units (not illustrated) provided corresponding to the respective rows of the pixel array of the pixel region 10 and has a function of holding the pixel signals of the pixels 12 of the respective rows output from the pixel region 10 in units of columns via the output lines 16 in the holding units of the corresponding rows.

The readout circuit unit 50 sequentially outputs the pixel signals held in the holding units of the respective rows to the DFE 70 in response to a control signal output from the control pulse generation unit 90.

Other configurations in the configuration example of Fig. 2 may be the same as those in the configuration example of Fig. 1.

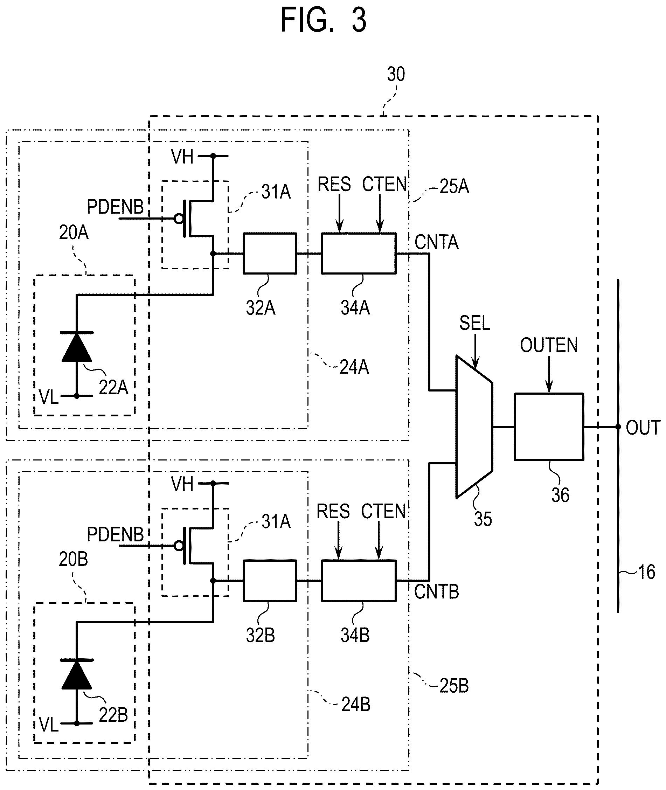

Fig. 3 is a block diagram illustrating a configuration example of a pixel circuit in the photoelectric conversion device according to the present embodiment. As illustrated in Fig. 3, the pixel 12 includes a photoelectric conversion unit 20 and a signal processing unit 30. The photoelectric conversion unit 20 includes a photoelectric conversion element 22 and outputs a signal according to incident light. The signal processing unit 30 includes a quenching circuit 31, a waveform shaping circuit 32, a counter 34, a selector 35, and an output circuit 36, and processes the signal output from the photoelectric conversion unit 20. In this specification, for convenience, a circuit block including the photoelectric conversion unit 20, the quenching circuit 31, and the waveform shaping circuit 32 among these circuit elements constituting the pixel 12 may be referred to as a photon detection circuit 24. A circuit block including the photoelectric conversion unit 20, the quenching circuit 31, the waveform shaping circuit 32, and the counter 34 may be referred to as a photon counting circuit 25. In Fig. 3, when a plurality of similar components is illustrated, these reference numerals are denoted by adding A or B to distinguish each other. When the same components are commonly described, the reference numerals A or B may be omitted. In the following embodiments, when the same constituent elements are distinguished from each other and described, reference numerals may be appropriately given to the same constituent elements.

Each pixel 12 includes at least one photon counting circuit 25, one selector 35, and one output circuit 36. In a case where each of the pixels 12 includes one photon counting circuit 25, one set of the selector 35 and the output circuit 36 is shared by a plurality of pixels 12. In a case where each pixel 12 includes a plurality of photon counting circuits 25, each pixel 12 may include a set of the selector 35 and the output circuit 36. In the latter case, the plurality of photon counting circuits 25 corresponding to the selector 35 and the output circuit 36 of each pixel 12 may belong to the same pixel 12 or may belong to different pixels 12. Each of the photon counting circuits 25 may include a plurality of photon detection circuits 24. The pixel circuit illustrated in Fig. 3 illustrates both a case where two pixels 12 each including one photon counting circuit 25 share one selector 35 and one output circuit 36, and a case where one pixel 12 includes two photon counting circuits 25.

The photoelectric conversion element 22 may be an avalanche photodiode (hereinafter referred to as "APD"). The quenching circuit 31 may be configured by, for example, a resistor, a transistor, or the like. Here, it is assumed that the quenching circuit 31 is formed of a p-channel MOS transistor. An anode of the APD constituting the photoelectric conversion element 22 is connected to a node to which a voltage VL is supplied. A cathode of the APD constituting the photoelectric conversion element 22 is connected to a drain of the p-channel MOS transistor constituting the quenching circuit 31 and an input node of the waveform shaping circuit 32. A source of the p-channel MOS transistor constituting the quenching circuit 31 is connected to a node to which a voltage VH higher than the voltage VL is supplied. The voltage VL and the voltage VH are set so that a reverse bias voltage sufficient for the APD to perform the avalanche multiplication operation is applied. In one example, a negative high voltage is applied as the voltage VL, and a positive voltage comparable to the power supply voltage is applied as the voltage VH. For example, the voltage VL may be -30 V, and the voltage VH may be 1 V.

The photoelectric conversion element 22 may be configured by an APD as described above. When a reverse bias voltage sufficient to perform the avalanche multiplication operation is supplied to the APD, carriers generated by light incident on the APD cause avalanche multiplication, and an avalanche current is generated. The operation modes in a state where the reverse bias voltage is supplied to the APD include a Geiger mode and a linear mode. The Geiger mode is an operation mode in which a voltage applied between the anode and the cathode is set to a reverse bias voltage larger than a breakdown voltage of the APD. The linear mode is an operation mode in which a voltage applied between the anode and the cathode is set to a reverse bias voltage close to or lower than the breakdown voltage of the APD. An APD that operates in Geiger mode is referred to as a single-photon avalanche diode (SPAD). The APD constituting the photoelectric conversion element 22 may be operated in the linear mode or in the Geiger mode, but the SPAD having a larger potential difference than the APD in the linear mode and having a remarkable improvement effect of the signal-to-noise ratio is more preferable.

Although the anode of the APD is set to a fixed potential and a signal is extracted from the cathode side in the circuit configuration of Fig. 3, the cathode of the APD may be set to a fixed potential and a signal may be extracted from the anode side. In the former case, the signal charge is an electron. In the latter case, the signal charge is a hole. Further, in the present embodiment, a case where one node of the APD is set to a fixed potential will be described, but the potentials of both nodes may vary. In the following description, a configuration in which electrons are used as the signal charge will be described.

The quenching circuit 31 has a function of converting a change in the avalanche current generated in the photoelectric conversion element 22 into a voltage signal. In addition, the quenching circuit 31 functions as a load circuit (quenching circuit) at the time of signal multiplication by avalanche multiplication and has a function of suppressing avalanche multiplication by reducing a voltage applied to the photoelectric conversion element 22. The operation in which the quenching circuit 31 suppresses avalanche multiplication is called a quenching operation. The quenching circuit 31 has a function of returning the voltage supplied to the photoelectric conversion element 22 to the voltage VH by flowing a current corresponding to the voltage drop due to the quenching operation. The operation of returning the voltage supplied from the quenching circuit 31 to the photoelectric conversion element 22 to the voltage VH is called a recharge operation.

In a case where the quenching circuit 31 is formed of a p-channel MOS transistor, a control signal PDENB output from the vertical scanning circuit unit 40 is input to a gate of the p-channel MOS transistor. Here, the control signal PDENB is an inverted signal of the APD enable signal (a control signal PDEN) for controlling the recharge operation of the photoelectric conversion element 22. That is, during a period in which the quenching circuit 31 receives a low-level control signal PDENB, the recharge operation by the quenching circuit 31 is enabled. The control signal PDENB may be generated by inverting the level of the control signal PDEN output from the vertical scanning circuit unit 40 in the pixel 12.

An input node of the waveform shaping circuit 32 is connected to a connection node between the photoelectric conversion element 22 and the quenching circuit 31. The waveform shaping circuit 32 has a function of converting an analog signal output from the photoelectric conversion unit 20 into a pulse signal. The waveform shaping circuit 32 may be configured by a logic circuit including a NOT circuit (inverter circuit), a NOR circuit, a NAND circuit, and the like. An output node of the waveform shaping circuit 32 is also an output node of the photon detection circuit 24.

An input node of the counter 34 is connected to the output node of the waveform shaping circuit 32. Control signals CTEN and RES from the vertical scanning circuit unit 40 are input to control nodes of the counter 34. The control signal CTEN is a count enable signal for controlling a count operation period of the counter 34. The control signal RES is a counter reset signal for resetting a count value of the counter 34. The counter 34 has a function of counting the pulse signals output from the waveform shaping circuit 32 and holding a count value as a counting result. The counter 34 counts the pulse signal output from the waveform shaping circuit 32 in a period in which the control signal CTEN is active (high-level). The counter 34 resets the held count value to an initial value in response to the control signal RES.

Output nodes of the counters 34A and 34B are connected to an input node of the selector 35. A control signal SEL from the vertical scanning circuit unit 40 is input to a control node of the selector 35. The control signal SEL is a selection signal for selecting a count value to be output to the output circuit 36 from among the count values of the counters 34A and 34B. The selector 35 has a function of selecting a count value to be output to the output circuit 36 from among the count values of the counters 34A and 34B. The selector 35 selects one of the count values of the counters 34A and 34B in accordance with the control signal SEL and outputs the selected count value to the output circuit 36. For example, the selector 35 selects the count value CNTA of the counter 34A when the control signal SEL is at low-level and selects the count value CNTB of the counter 34B when the control signal SEL is at high-level.

An input node of the output circuit 36 is connected to an output node of the selector 35. An output node of the output circuit 36 is connected to the output line 16. A control signal OUTEN from the vertical scanning circuit unit 40 is input to a control node of the output circuit 36. The control signal OUTEN is an output enable signal for controlling the output of a signal to the output line 16. The output circuit 36 has a function of outputting a signal from the selector 35 to the output line 16. That is, the output circuit 36 outputs the count value CNTA or the count value CNTB selected by the selector 35 to the output line 16 in accordance with the control signal OUTEN.

The pixel 12 is typically a unit structure that outputs a pixel signal for forming an image. However, in the case of aiming at distance measurement using a time of flight (TOF) method, the pixel 12 does not necessarily need to be a unit structure that outputs a pixel signal for forming an image. That is, the pixel 12 may be a unit structure that outputs a signal for measuring the time at which light arrives and the amount of light.

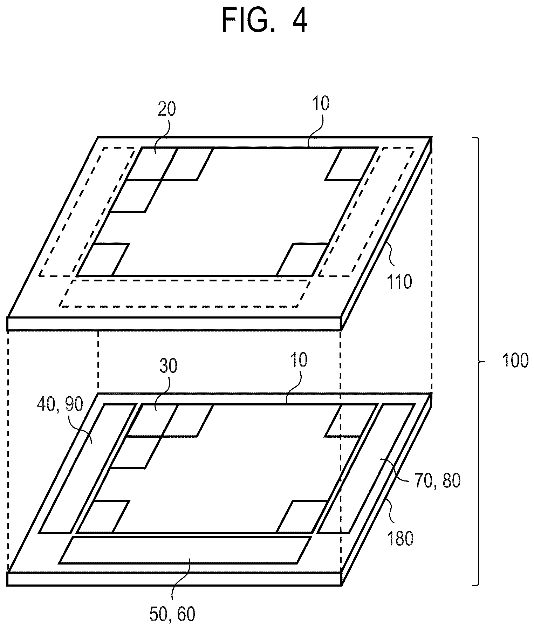

The photoelectric conversion device 100 according to the present embodiment may be formed on one substrate or may be configured as a stacked-type photoelectric conversion device in which a plurality of substrates are stacked. In the latter case, as illustrated in, e.g., Fig. 4, the photoelectric conversion device may be configured as a stacked-type photoelectric conversion device in which a sensor substrate 110 and a circuit substrate 180 are stacked and electrically connected to each other.

The pixel region 10 may be provided in each of the sensor substrate 110 and the circuit substrate 180 so as to overlap each other in a plan view. At least the photoelectric conversion unit 20 among the constituent elements of the pixels 12 may be arranged on the sensor substrate 110. The signal processing unit 30 among the constituent elements of the pixels 12 may be arranged on the circuit substrate 180. The photoelectric conversion unit 20 and the signal processing unit 30 of each of the plurality of pixels 12 constituting the pixel region 10 may be provided on the sensor substrate 110 and the circuit substrate 180 so as to overlap each other in the plan view. The photoelectric conversion unit 20 and the signal processing unit 30 are electrically connected to each other via an interconnection (not illustrated) provided for each pixel 12. Here, the term "plan view" refers to a view from a direction perpendicular to the surface of the sensor substrate 110.

The circuit substrate 180 may further include the vertical scanning circuit unit 40, the readout circuit unit 50, the horizontal scanning circuit unit 60, the DFE 70, the TX 80, and the control pulse generation unit 90. The vertical scanning circuit unit 40, the readout circuit unit 50, the horizontal scanning circuit unit 60, the DFE 70, the TX 80, and the control pulse generation unit 90 may be arranged around the pixel region 10 on the circuit substrate 180. These functional blocks may be provided on one of the sensor substrate 110 and the circuit substrate 180 or may be provided by being divided into the sensor substrate 110 and the circuit substrate 180.

By constituting the stacked-type photoelectric conversion device 100, it is possible to increase the degree of integration of elements and achieve higher functionality. In particular, by arranging the photoelectric conversion unit 20 and the signal processing unit 30 on different substrates, the photoelectric conversion elements 22 may be arranged at high density without sacrificing the light receiving area of the photoelectric conversion elements 22, and the photon detection efficiency may be improved. In addition, by arranging the peripheral circuit on the substrate different from the substrate on which the photoelectric conversion unit 20 is arranged, it is possible to increase the circuit scale and to achieve higher functionality of the peripheral circuit.

In Fig. 4, a diced chip is assumed as the sensor substrate 110 and the circuit substrate 180, but the sensor substrate 110 and the circuit substrate 180 are not limited to chips. For example, each of the sensor substrate 110 and the circuit substrate 180 may be a wafer. In addition, the sensor substrate 110 and the circuit substrate 180 may be stacked in a wafer state and then diced or may be stacked and bonded after being formed into chips. The number of substrates constituting the stacked-type photoelectric conversion device is not necessarily two and may be three or more.

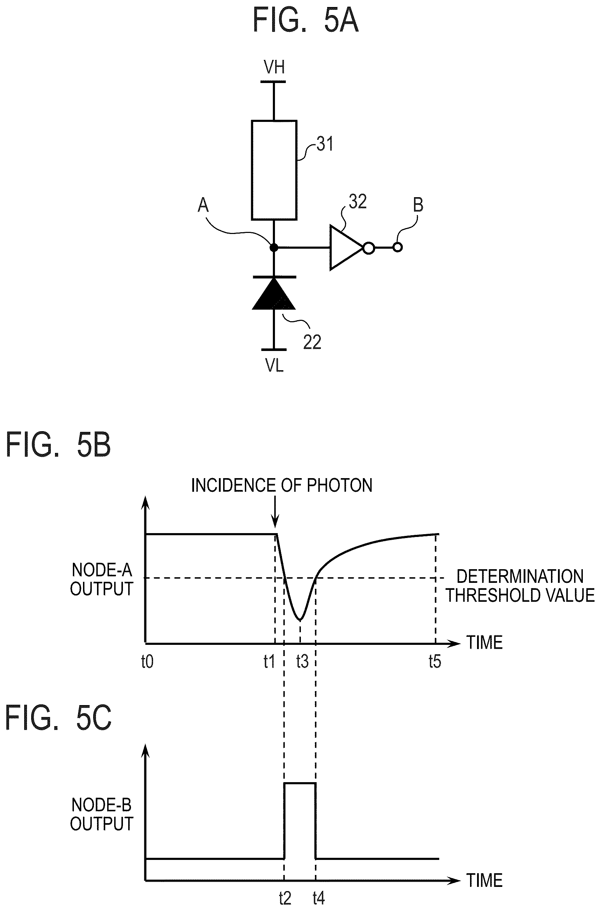

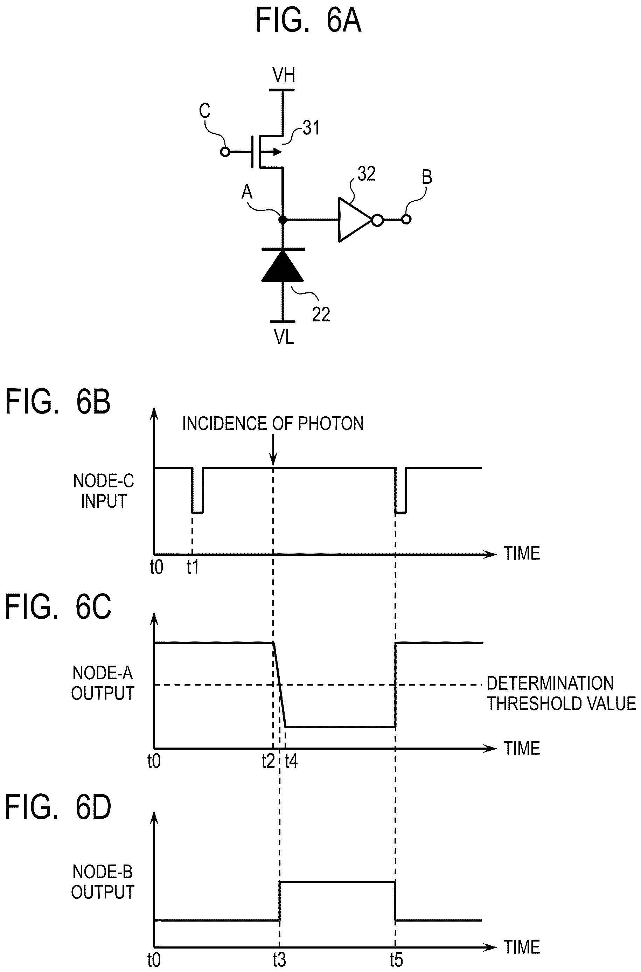

Next, a basic operation of the photon detection circuit 24 in the photoelectric conversion device according to the present embodiment will be described with reference to Fig. 5A to Fig. 6D. Fig. 5A to Fig. 6D are diagrams illustrating the basic operation of the photon detection circuit 24 in the photoelectric conversion device according to the present embodiment. Fig. 5A to Fig. 5C illustrate a case where passive recharge driving is applied as a driving method of the photoelectric conversion element 22, and Fig. 6A to Fig. 6D illustrate a case where clock recharge driving is applied as a driving method of the photoelectric conversion element 22. Here, in order to simplify the description, it is assumed that the waveform shaping circuit 32 is constituted by an inverter circuit.

First, an operation in the case where passive recharge driving is applied as a driving method of the photoelectric conversion element 22 will be described. Fig. 5A is a circuit diagram of the photon detection circuit 24. Fig. 5B illustrates the waveform of the signal at the input node (node-A) of the waveform shaping circuit 32. Fig. 5C illustrates the waveform of the signal at the output node (node-B) of the waveform shaping circuit 32.

At time t0, a reverse bias voltage having a potential difference corresponding to (VH-VL) is applied to the photoelectric conversion element 22. Although a reverse bias voltage sufficient to cause avalanche multiplication is applied between the anode and the cathode of the APD constituting the photoelectric conversion element 22, carriers serving as seeds of avalanche multiplication do not exist in a state where photons are not incident on the photoelectric conversion element 22. Therefore, avalanche multiplication does not occur in the photoelectric conversion element 22, and no current flows through the photoelectric conversion element 22.

At the subsequent time t1, it is assumed that a photon is incident on the photoelectric conversion element 22. When a photon enters the photoelectric conversion element 22, an electron-hole pair is generated by photoelectric conversion, avalanche multiplication occurs using these carriers as seeds, and an avalanche multiplication current flows through the photoelectric conversion element 22. When the avalanche multiplication current flows through the quenching circuit 31, a voltage drop occurs due to the quenching circuit 31, and the voltage of the node-A starts to drop. When the voltage drop amount of the node-A becomes large and the avalanche multiplication is stopped at time t3, the voltage level of the node-A no longer drops.

When the avalanche multiplication in the photoelectric conversion element 22 stops, a current that compensates for the voltage drop flows from the node of the voltage VH to the node-A via the quenching circuit 31, and the voltage of the node-A gradually increases. Thereafter, at time t5, the node-A is settled to the original voltage level. That is, the recharge operation of the photoelectric conversion element 22 is performed.

The waveform shaping circuit 32 binarizes the signal input from the node-A according to a predetermined determination threshold value and outputs the signal from the node-B. Specifically, the waveform shaping circuit 32 outputs a low-level signal from the node-B when the voltage level of the node-A exceeds the determination threshold value, and outputs a high-level signal from the node-B when the voltage level of the node A is equal to or less than the determination threshold value. For example, as illustrated in Fig. 5B, it is assumed that the voltage of the node-A is equal to or lower than the determination threshold value in the period from the time t2 to the time t4. In this case, as illustrated in Fig. 5C, the signal level at the node-B becomes low-level in the period from the time t0 to the time t2 and the period from the time t4 to the time t5 and becomes high-level in the period from the time t2 to the time t4.

Thus, the analog signal input from the node-A is waveform-shaped into a digital signal by the waveform shaping circuit 32. A pulse signal output from the waveform shaping circuit 32 in response to incidence of a photon on the photoelectric conversion element 22 is a photon detection pulse signal.

When the quenching circuit 31 is formed of a p-channel MOS transistor as in the present embodiment, the above-described operation may occur when the p-channel MOS transistor is in the on-state, that is, when the control signal PDENB is at low-level. That is, during the period in which the p-channel MOS transistor is in the on-state, the above-described operation is repeatedly performed in accordance with the incidence of photons, and a plurality of photon detection pulse signals may be output. On the other hand, when the p-channel MOS transistor is in the off-state, that is, when the control signal PDENB is at high-level, the photoelectric conversion element 22 is not recharged, and thus the number of times the photon detection pulse signal is output from the photon detection circuit 24 is at most one. In the present embodiment, enabling the APD means controlling the control signal PDENB to low-level, and disabling the APD means controlling the control signal PDENB to high-level.

Next, an operation in the case of applying the clock recharge driving as the driving method of the photoelectric conversion element 22 will be described. Fig. 6A is a circuit diagram of the photon detection circuit 24. Fig. 6B illustrates the waveform of the signal at the input node (node-C) of the quenching circuit 31. Fig. 6C illustrates the waveform of the signal at the input node (node-A) of the waveform shaping circuit 32. Fig. 6D illustrates the waveform of the signal at the output node (node-B) of the waveform shaping circuit 32.

In the circuit of Fig. 6A, the quenching circuit 31 is formed of a p-channel MOS transistor. A source of the p-channel MOS transistor is connected to the node of the voltage VH, and a drain of the p-channel MOS transistor is connected to the cathode of the photoelectric conversion element 22 and the input node of the waveform shaping circuit 32. A connection node between the drain of the p-channel MOS transistor, the cathode of the photoelectric conversion element 22, and the input node of the waveform shaping circuit 32 is a node-A. As illustrated in Fig. 6B, for example, a periodic pulse signal (hereinafter referred to as a reset pulse signal) is input to a gate (node-C) of the p-channel MOS transistor. The reset pulse signal is a falling pulse that transitions from high-level to low-level. The p-channel MOS transistor is turned off when the node-C is at high-level to disconnect the node-A from the node of the voltage VH and is turned on when the node-C is at low-level to reset the node-A to the voltage VH.

When a reset pulse signal is input to the node-C at time t1, the p-channel MOS transistor is turned on, and the node-A is reset to the voltage VH. When the node-C returns to high-level, the p-channel MOS transistor is turned off, and the node-A enters a floating state at the voltage VH.

At the subsequent time t2, it is assumed that a photon is incident on the photoelectric conversion element 22. When a photon enters the photoelectric conversion element 22, an electron-hole pair is generated by photoelectric conversion, avalanche multiplication occurs using these carriers as seeds, and an avalanche multiplication current flows through the photoelectric conversion element 22. When this avalanche multiplication current flows through the quenching circuit 31, a voltage drop occurs by the quenching circuit 31, and the voltage of the node-A starts to drop. When the voltage drop amount of the node-A becomes large and becomes approximately Vex, avalanche multiplication is stopped at time t4, and the voltage level of the node-A does not drop any more. The potential at which the avalanche multiplication is stopped is about 0 V, that is, a potential at which the voltage applied to the photoelectric conversion element 22 is about Vbd. The node-A enters a floating state while being kept at a lowered potential.

When the reset pulse signal is input to the node-C again at time t5, the p-channel MOS transistor is turned on, and the node-A is reset to the voltage VH again.

The waveform shaping circuit 32 binarizes the signal input from the node-A according to a predetermined determination threshold value, and outputs the signal from the node-B. Specifically, the waveform shaping circuit 32 outputs a low-level signal from the node-B when the voltage level of the node-A exceeds the determination threshold value and outputs a high-level signal from the node-B when the voltage level of the node-A is equal to or less than the determination threshold value. For example, as illustrated in Fig. 6C, it is assumed that the voltage of the node-A is equal to or lower than the determination threshold value in the period from the time t3 to the time t5. In this case, as illustrated in Fig. 6D, the signal level at the node-B becomes low-level in the period from the time t0 to the time t3 and the period after the time t5, and becomes high-level in the period from the time t3 to the time t5.

Thus, the analog signal input from the node-A is waveform-shaped into a digital signal by the waveform shaping circuit 32. A pulse signal output from the waveform shaping circuit 32 in response to incidence of a photon on the photoelectric conversion element 22 is a photon detection pulse signal.

In the operation of Fig. 6B to Fig. 6D, if no photon is incident between the time t1 and the time t5, the node-A remains at the voltage VH, and the node-B remains at low-level. In addition, in a case where the photon is incident again during a period from the time when the photon is incident at the time t2 to the time t5, that is, in a state where the potential of the node-A is lowered, the photoelectric conversion element 22 cannot cause further avalanche multiplication. Therefore, the number of incidences of photons that can be detected by the waveform shaping circuit 32 in the period from the time t1 to the time t5 is one at the maximum.

As described above, in the operation of Fig. 6B to Fig. 6D, it is possible to distinguish whether the number of photons incident during one period of the reset pulse signal is 0 or 1 or more. On the other hand, when two or more photons are incident during one period of the reset pulse signal, these photons cannot be distinguished from each other, and there is a possibility that a signal detection loss occurs.

In the case where the photons are incident from the next to the next without interruption, in the operation of Fig. 5B and Fig. 5C, the avalanche multiplication in the photoelectric conversion element 22 does not stop and the avalanche current continues to flow, that is, a so-called pile-up state is obtained. In this pile-up state, the photon detection pulse signal is not generated, and only the current may flow wastefully.

On the other hand, in the operation of Fig. 6B to Fig. 6D, when two or more photons are incident during one period of the reset pulse signal, these photons cannot be distinguished from each other, but there is an advantage that pile-up that may occur in the operation of Fig. 5B and Fig. 5C does not occur. Although signal detection loss may certainly occur in the operation of Fig. 6B to Fig. 6D, the SPAD originally aims at photon detection in a situation where photon incidence is small, and in such a situation, it is rare that photons are incident a plurality of times during one reset pulse period, and signal detection loss hardly occurs. Therefore, particularly when SPAD is used as an image sensor, the operation of Fig. 6B to Fig. 6D is often applied.

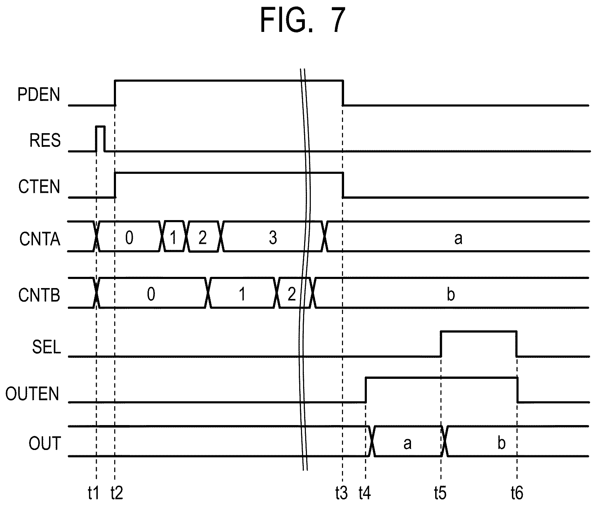

Next, a driving example of the photoelectric conversion device according to the present embodiment will be described with reference to Fig. 7. Note that although an example in which passive recharge driving is applied as a driving method of the photoelectric conversion element 22 is described here, clock recharge driving may be applied as a driving method of the photoelectric conversion element 22. In this case, the control signal PDEN may be a periodic pulse signal, and the control signal PDENB input to the quenching circuit 31 during the effective period of the photoelectric conversion element 22 may have a waveform as illustrated in Fig. 6B. The same applies to the following embodiments.

Fig. 7 is a timing chart illustrating a driving example of the photoelectric conversion device according to the present embodiment. Fig. 7 illustrates waveforms of the control signals PDEN, RES, CTEN, SEL, and OUTEN, count values CNTA and CNTB of the counter 34, and values of the output signal OUT.

It is assumed that the control signals PDEN, RES, CTEN, SEL, and OUTEN are at low-level just before time t1.

At the time t1, the vertical scanning circuit unit 40 controls the control signal RES from low-level to high-level. As a result, the count value CNTA of the counter 34A and the count value CNTB of the counter 34B are reset to 0.

At time t2 after the control signal RES is returned to low-level, the vertical scanning circuit unit 40 controls the control signal PDEN from low-level to high-level to start the exposure period. Accordingly, the control signal PDENB input to the control node of the quenching circuit 31 becomes low-level, and the p-channel MOS transistor configuring the quenching circuit 31 is turned on. As a result, the photoelectric conversion element 22 is recharged to a state in which avalanche multiplication in the Geiger mode is possible.

At the time t2, the vertical scanning circuit unit 40 also controls the control signal CTEN from low-level to high-level. Accordingly, the counters 34A and 34B are enabled, and the photon detection pulse signals output from the waveform shaping circuits 32A and 32B in response to photon incidence may be counted by the counters 34A and 34B, respectively.

After the time t2, the counter 34A counts up the count value by 1 every time the photon detection pulse signal output from the photon detection circuit 24A in accordance with the incidence of a photon is received. Similarly, the counter 34B counts up the count value by 1 every time the photon detection pulse signal output from the photon detection circuit 24B is received in accordance with the incidence of a photon. As a result, it is assumed that the count value CNTA of the counter 34A and the count value CNTB of the counter 34B reach the value a and the value b, respectively, just before time t3.

At the subsequent time t3, the vertical scanning circuit unit 40 controls the control signal PDEN from high-level to low-level. Accordingly, the control signal PDENB input to the control node of the quenching circuit 31 becomes high-level, and the p-channel MOS transistor configuring the quenching circuit 31 is turned off. As a result, the recharge operation of the photoelectric conversion element 22 is stopped.

At the time t3, the vertical scanning circuit unit 40 also controls the control signal CTEN from high-level to low-level. As a result, the counters 34A and 34B are invalidated, and the count operation of the counters 34A and 34B is stopped. After the time t3, the counter 34A holds the value a as the count value CNTA, and the counter 34B holds the value b as the count value CNTB.

At the subsequent time t4, the vertical scanning circuit unit 40 controls the control signal OUTEN from low-level to high-level. As a result, the output circuit 36 becomes a state in which an output signal of the selector 35 may be output to the output line 16.

At the time t4, since the control signal SEL is at low-level, the selector 35 selects the count value CNTA of the counter 34A and outputs it to the output circuit 36. The output circuit 36 outputs the value a, which is the count value CNTA of the counter 34A, to the output line 16 as the output signal OUT.

At the subsequent time t5, the vertical scanning circuit unit 40 controls the control signal SEL from low-level to high-level. Accordingly, the selector 35 selects the count value CNTB of the counter 34B and outputs the count value CNTB to the output circuit 36. The output circuit 36 outputs the value b, which is the count value CNTB of the counter 34B, to the output line 16 as the output signal OUT.

At the subsequent time t6, the vertical scanning circuit unit 40 controls the control signals SEL and OUTEN from high-level to low-level, thereby ending the readout operation from the pixel 12.

As described above, in the present embodiment, the output signals of the plurality of counters 34A and 34B are sequentially selected by the selector 35 and sequentially output from one output circuit 36 to the output line 16.

When the count values of the plurality of counters are read out to the output line at the same time, it is necessary to provide the output line 16 including the number of signal lines corresponding to the total number of bits of the plurality of counters in each column. Therefore, the number of signal lines constituting the output line 16 of each column increases, and there is a possibility that the number of signal lines may not fall within a desired pixel pitch. Although it is conceivable to narrow the line width of the signal line to be within a desired pixel pitch, in this case, there is a concern that the interconnection resistance increases and the signal transfer time increases. In addition, since the output circuits are required as many as the number of signal lines, the circuit area is also increased.

In this regard, in the present embodiment, since one output circuit 36 is shared by the plurality of photon counting circuits 25 by using the selector 35, pixel signals corresponding to the number of the shared photon counting circuits 25 may be sequentially output from one output circuit 36 to the output line 16 in a time division manner. As a result, it is possible to prevent an increase in the number of signal lines constituting the output line 16 and the circuit area of the output circuit 36. Further, since the line width of the signal line may be increased as compared with the case where the signal lines corresponding to the number of the counters 34 are provided, the interconnection resistance may be reduced and the signal transfer time may be shortened.

Therefore, according to the present embodiment, in the photoelectric conversion device including the plurality of counters in the pixel circuit, it is possible to suppress an increase in the circuit scale of the pixel circuit and an increase in the signal transfer time.

### Second Embodiment

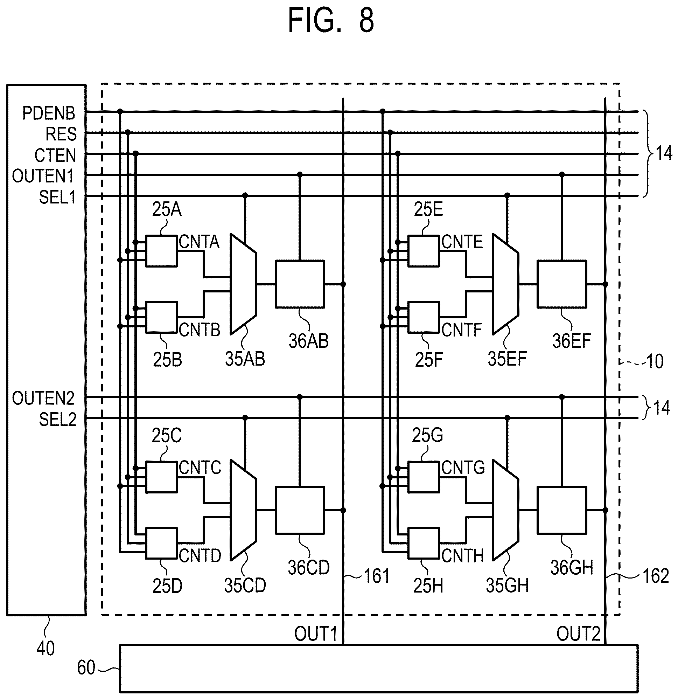

A photoelectric conversion device and a method of driving the same according to a second embodiment will be described with reference to Fig. 8 to Fig. 11. The same components as those of the photoelectric conversion device according to the first embodiment are denoted by the same reference numerals, and description thereof will be omitted or simplified.

A photoelectric conversion device according to the present embodiment is the same as the photoelectric conversion device according to the first embodiment except that the configuration of the pixel 12 is different. In the present embodiment, differences from the photoelectric conversion device according to the first embodiment will be mainly described, and description of points similar to those of the photoelectric conversion device according to the first embodiment will be appropriately omitted.

Fig. 8 is a block diagram illustrating a configuration example of the pixel region 10 in the photoelectric conversion device according to the present embodiment. In the present embodiment, a pixel block including two pixels 12 arranged in two rows and one column is configured by the pixel circuit described with reference to Fig. 3 in the first embodiment. The pixel region 10 is configured by repeatedly arranging the pixel blocks in the row direction and the column direction. Fig. 8 illustrates eight pixels 12 arranged in four rows × two columns among the plurality of pixels 12 constituting the pixel region 10.

In the present embodiment, two pixels 12 each including one photon counting circuit 25 share one set of a selector 35 and an output circuit 36. In a case where two pixels 12 including one photon counting circuit 25 share one set of selector 35 and output circuit 36, these two pixels 12 may be arranged in different rows of the same column.

Specifically, in a first column (left side in Fig. 8), a pixel 12 including a photon counting circuit 25A and arranged in a first row (upper side in Fig. 8) and a pixel 12 including a photon counting circuit 25B and arranged in a second row are provided. In the first column, a pixel 12 including a photon counting circuit 25C and arranged in a third row and a pixel 12 including a photon counting circuit 25D and arranged in a fourth row are further provided. The pixel 12 including the photon counting circuit 25A and the pixel 12 including the photon counting circuit 25B share a selector 35AB and an output circuit 36AB. The pixel 12 including the photon counting circuit 25C and the pixel 12 including the photon counting circuit 25D share a selector 35CD and an output circuit 36CD.

Further, in a second column, a pixel 12 including a photon counting circuit 25E and arranged in the first row and a pixel 12 including a photon counting circuit 25F and arranged in the second row are provided. In the second column, a pixel 12 including a photon counting circuit 25G and arranged in the third row and a pixel 12 including a photon counting circuit 25H and arranged in the fourth row are further provided. The pixel 12 including the photon counting circuit 25E and the pixel 12 including the photon counting circuit 25F share a selector 35EF and an output circuit EF. The pixel 12 including the photon counting circuit 25G and the pixel 12 including the photon counting circuit 25H share a selector 35GH and an output circuit 36GH.

Control signals SEL1 and OUTEN1 are supplied to the pixels 12 in the first row and the second row from the vertical scanning circuit unit 40. Control signals SEL2 and OUTEN2 are supplied to the pixels 12 in the third row and the fourth row from the vertical scanning circuit unit 40. Each of the control signals PDENB, RES, and CTEN may be common to all the pixels 12. Therefore, each of the control signals PDENB, RES, and CTEN may be supplied to each pixel 12 via a common signal line or a signal line arranged in each row. The output signal OUT1 read out from the output circuit 36AB or the output circuit 36CD is input to the readout circuit unit 50 via the output line 161 arranged in the first column. The output signal OUT2 read out from the output circuit 36EF or the output circuit 36GH is input to the readout circuit unit 50 via the output line 162 arranged in the second column.

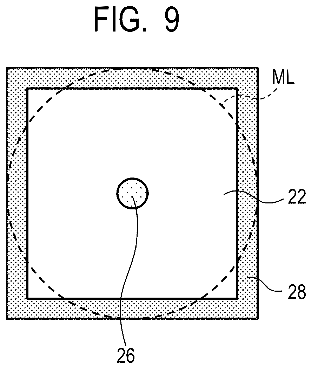

Fig. 9 is a plan view of the photoelectric conversion element 22 and the microlens ML included in each of the photon counting circuits 25A, 25B, 25C, 25D, 25E, 25F, 25G and 25H. The photoelectric conversion element 22 includes an APD formed of a p-n junction between an n-type semiconductor region and a p-type semiconductor region provided in a semiconductor substrate. A cathode electrode 26 connected to the cathode of the APD, an anode electrode (not illustrated) connected to the anode of the APD, and the like are provided on the semiconductor substrate on which the photoelectric conversion element 22 is arranged. An isolation region 28 for electrically isolating adjacent photoelectric conversion elements 22 from each other is provided around the photoelectric conversion elements 22. The isolation method of the isolation region 28 may be p-n junction isolation or insulator isolation using silicon oxide or the like. The microlens ML is provided on an optical path of light incident on the photoelectric conversion element 22 so as to cover the photoelectric conversion element 22.

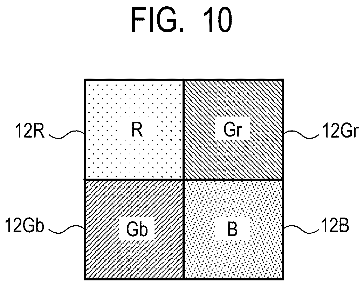

Fig. 10 is a diagram illustrating an arrangement example of color filters in the photoelectric conversion device according to the present embodiment. Fig. 10 illustrates four pixels 12 arranged in a matrix of two rows and two columns among the plurality of pixels 12 constituting the pixel region 10.

In Fig. 10, the color of the color filter included in each pixel 12 is represented by any one of R, Gr, Gb, and B. The pixel 12 labeled "R" is the pixel 12 provided with a red filter having a transmission wavelength range in a red wavelength range. The pixel 12 labeled "Gr" or "Gb" is the pixel 12 including a green filter having a transmission wavelength range in a green wavelength range. The pixel 12 labeled "B" is the pixel 12 provided with a blue filter having a transmission wavelength range in a blue wavelength range. Note that Gr indicates the pixel 12 arranged in the same row as the pixels 12 provided with the red filter among the pixels 12 provided with the green filter. Gb indicates the pixel 12 arranged in the same row as the pixel 12 provided with the blue filter among the pixels 12 provided with the green filter. Hereinafter, the pixel 12 sensitive to red light may be referred to as a pixel 12R, the pixel 12 sensitive to green light may be referred to as a pixel 12Gr or a pixel 12Gb, and the pixel 12 sensitive to blue light may be referred to as a pixel 12B. When the pixel 12Gr and the pixel 12Gb are comprehensively described, they may be referred to as a pixel 12G.

The pixels 12R, 12G, and 12B may be arranged in a so-called Bayer arrangement. In the Bayer arrangement, as illustrated in, e.g., Fig. 10, in a pixel block of 2 rows × 2 columns which is a minimum repetition unit, two pixels 12G are arranged at one diagonal positions, and a pixel 12R and a pixel 12B are arranged at the other diagonal positions. The pixel region 10 is configured by repeatedly arranging the pixel blocks in the row direction and the column direction.

For example, in the case of the pixel array illustrated in Fig. 8, the pixel 12 including the photon counting circuit 25A and the pixel including the photon counting circuit 25C may be the pixel 12R. The pixel 12 including the photon counting circuit 25E and the pixel including the photon counting circuit 25G may be the pixel 12Gr. The pixel 12 including the photon counting circuit 25B and the pixel including the photon counting circuit 25D may be the pixel 12Gb. The pixel 12 including the photon counting circuit 25F and the pixel including the photon counting circuit 25H may be the pixel 12B.

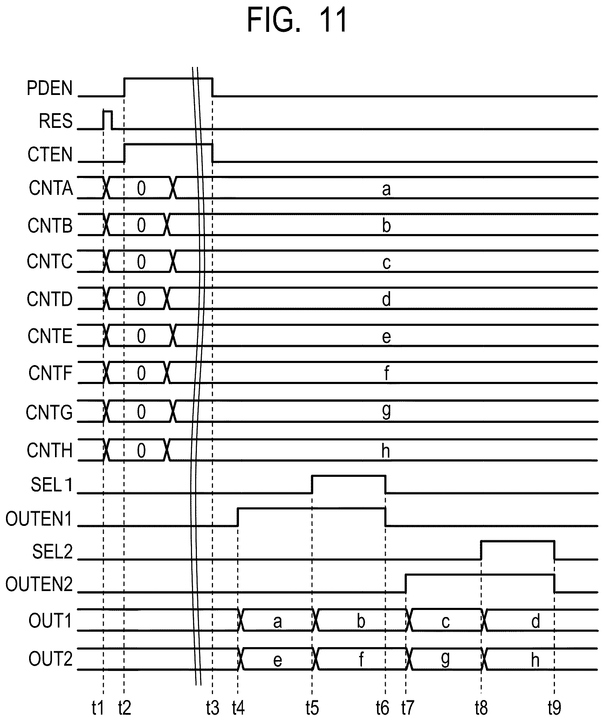

Next, a driving example of the photoelectric conversion device according to the present embodiment will be described with reference to Fig. 11. Fig. 11 is a timing chart illustrating a driving example of the photoelectric conversion device according to the present embodiment. Fig. 11 illustrates waveforms of the control signals PDEN, RES, CTEN, SEL1, OUTEN1, SEL2 and OUTEN2, count values CNTA to CNTH of the counters of the photon counting circuits 25A to 25H, and values of the output signals OUT1 and OUT2.

Just before time t1, the control signals PDEN, RES, CTEN, SEL1, OUTEN1, SEL2 and OUTEN2 are at low-level.

At time t1, the vertical scanning circuit unit 40 controls the control signal RES from low-level to high-level. As a result, the count values CNTA to CNTH of the counters 34 of the pixels 12 are reset to 0.

At time t2 after the control signal RES is returned to low-level, the vertical scanning circuit unit 40 controls the control signal PDEN from low-level to high-level and starts the exposure period. Accordingly, the control signal PDENB input to the control node of the quenching circuit 31 of each pixel 12 becomes low-level, and the p-channel MOS transistor configuring the quenching circuit 31 is turned on. As a result, the photoelectric conversion element 22 of each pixel 12 is recharged to a state in which avalanche multiplication in the Geiger mode is possible.

At the time t2, the vertical scanning circuit unit 40 also controls the control signal CTEN from low-level to high-level. As a result, the counter 34 of each pixel 12 is enabled, and the photon detection pulse signal output from the waveform shaping circuit 32 in response to photon incidence may be counted.

After the time t2, the counter 34 of each pixel 12 counts up the count value by one every time the photon detection pulse signal output from the photon detection circuit 24 is received in accordance with the incidence of the photon. As a result, it is assumed that the count values CNTA to CNTH of the counters 34 of the pixels 12 have reached the values a to h, respectively, just before the time t3.

At the subsequent time t3, the vertical scanning circuit unit 40 controls the control signal PDEN from high-level to low-level. Accordingly, the control signal PDENB input to the control node of the quenching circuit 31 of each pixel 12 becomes high-level, and the p-channel MOS transistor configuring the quenching circuit 31 is turned off. As a result, the recharge operation of the photoelectric conversion element 22 in each pixel 12 is stopped.

At the time t3, the vertical scanning circuit unit 40 also controls the control signal CTEN from high-level to low-level. As a result, the counter 34 of each pixel 12 is invalidated, and the count operation of the counter 34 is stopped. After the time t3, the counter 34 of each pixel 12 holds the values a to h.

At the subsequent time t4, the vertical scanning circuit unit 40 controls the control signal OUTEN1 from low-level to high-level. As a result, the output circuit 36AB becomes a state in which the output signal of the selector 35AB may be output to the output line 161, and the output circuit 36EF becomes a state in which the output signal of the selector 35EF may be output to the output line 162.

At the time t4, since the control signal SEL1 is at low-level, the selector 35AB selects the count value CNTA of the counter 34 of the photon counting circuit 25A, and the selector 35EF selects the count value CNTE of the counter 34 of the photon counting circuit 25E. Accordingly, the output circuit 36AB outputs the value a, which is the count value CNTA of the counter 34 of the photon counting circuit 25A, to the output line 161 as the output signal OUT1. The output circuit 36EF outputs a value e, which is the count value CNTE of the counter 34 of the photon counting circuit 25E, to the output line 162 as the output signal OUT2.

At the subsequent time t5, the vertical scanning circuit unit 40 controls the control signal SEL1 from low-level to high-level. Accordingly, the selector 35AB selects the count value CNTB of the counter 34 of the photon counting circuit 25B, and the selector 35EF selects the count value CNTF of the counter 34 of the photon counting circuit 25F. The output circuit 36AB outputs the value b, which is the count value CNTB of the counter 34 of the photon counting circuit 25B, to the output line 161 as the output signal OUT1. The output circuit 36EF outputs a value f, which is the count value CNTF of the counter 34 of the photon counting circuit 25F, to the output line 162 as the output signal OUT2.

At the subsequent time t6, the vertical scanning circuit unit 40 controls the control signals SEL1 and OUTEN1 from high-level to low-level, thereby ending the readout operation from the pixels 12 in the first row and the second row.

At the subsequent time t7, the vertical scanning circuit unit 40 controls the control signal OUTEN2 from low-level to high-level. As a result, the output circuit 36CD becomes a state in which the output signal of the selector 35CD may be output to the output line 161, and the output circuit 36GH becomes a state in which the output signal of the selector 35GH may be output to the output line 162.

At the time t7, since the control signal SEL2 is at low-level, the selector 35CD selects the count value CNTC of the counter 34 of the photon counting circuit 25C, and the selector 35GH selects the count value CNTG of the counter 34 of the photon counting circuit 25G. Accordingly, the output circuit 36CD outputs the value c, which is the count value CNTC of the counter 34 of the photon counting circuit 25C, to the output line 161 as the output signal OUT1. The output circuit 36GH outputs a value g, which is the count value CNTG of the counter 34 of the photon counting circuit 25G, to the output line 162 as the output signal OUT2.

At the subsequent time t8, the vertical scanning circuit unit 40 controls the control signal SEL2 from low-level to high-level. Accordingly, the selector 35CD selects the count value CNTD of the counter 34 of the photon counting circuit 25D, and the selector 35GH selects the count value CNTH of the counter 34 of the photon counting circuit 25H. The output circuit 36CD outputs the value d, which is the count value CNTD of the counter 34 of the photon counting circuit 25D, to the output line 161 as the output signal OUT1. The output circuit 36GH outputs a value h, which is the count value CNTH of the counter 34 of the photon counting circuit 25H, to the output line 162 as the output signal OUT2.

At the subsequent time t9, the vertical scanning circuit unit 40 controls the control signals SEL2 and OUTEN2 from high-level to low-level, thereby ending the readout operation from the pixels 12 in the third row and the fourth row.

After the time t9, the pixel signals corresponding to the respective colors are subjected to demosaic processing in the DFE 70 or an external processing circuit of the photoelectric conversion device, whereby a color image may be generated.

As described above, even when two pixels 12 each including one photon counting circuit 25 share one set of the selector 35 and the output circuit 36, the output signals of the plurality of counters 34 may be sequentially selected by the selector 35 and sequentially output from one output circuit 36 to the output line 16.

Therefore, according to the present embodiment, similarly to the first embodiment, in the photoelectric conversion device including the plurality of counters in the pixel circuit, it is possible to suppress an increase in the circuit scale of the pixel circuit and an increase in the signal transfer time.

### Third Embodiment

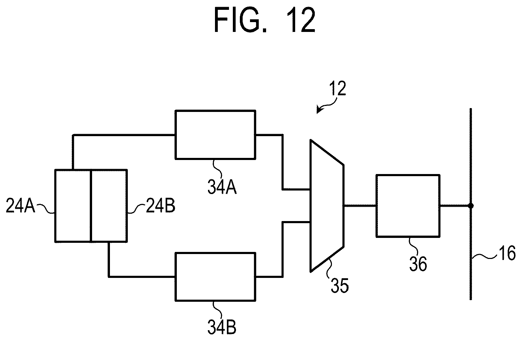

A photoelectric conversion device and a method of driving the same according to a third embodiment will be described with reference to Fig. 12 to Fig. 17. The same components as those of the photoelectric conversion device according to the first or second embodiment are denoted by the same reference numerals, and description thereof will be omitted or simplified.

A photoelectric conversion device according to the present embodiment is the same as the photoelectric conversion device according to the first or second embodiment except that the configuration of the pixel 12 is different. In the present embodiment, differences from the photoelectric conversion device according to the first or second embodiment will be mainly described, and description of points similar to those of the photoelectric conversion device according to the first or second embodiment will be appropriately omitted.

Fig. 12 is a block diagram illustrating a configuration example of the pixel 12 in the photoelectric conversion device according to the present embodiment. In the present embodiment, one pixel 12 is configured by the pixel circuit described with reference to Fig. 3 in the first embodiment. That is, the pixel 12 of the present embodiment includes a plurality of photon counting circuits 25, and these circuits share one set of the selector 35 and the output circuit 36. Fig. 12 illustrates, as an example, a pixel 12 including a photon counting circuit including a photon detection circuit 24A and a counter 34A, a photon counting circuit including a photon detection circuit 24B and a counter 34B, a selector 35, and an output circuit 36.

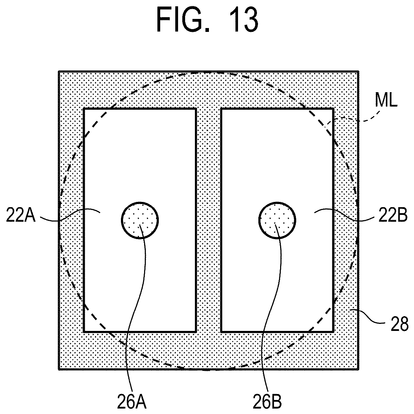

As described above, the photon detection circuit 24A includes the photoelectric conversion element 22A, and the photon detection circuit 24B includes the photoelectric conversion element 22B. In the present embodiment, the two photoelectric conversion elements 22A and 22B share one microlens. Fig. 13 is a plan view of the photoelectric conversion elements 22A and 22B and the microlens ML included in one pixel 12. As illustrated in Fig. 13, the two photoelectric conversion elements 22A and 22B of one pixel 12 are arranged adjacent to each other in the first direction (horizontal direction in the drawing) and share one microlens ML. In other words, the photoelectric conversion element 22A and the photoelectric conversion element 22B are configured to receive light passing through different pupil regions. For example, the photoelectric conversion element 22A is configured such that light that has passed through a first pupil region of an optical system (for example, an imaging optical system) that guides photons to the photoelectric conversion unit 20 is incident thereon. The photoelectric conversion element 22B is configured such that light that has passed through a second pupil region of the optical system that guides photons to the photoelectric conversion unit 20 is incident thereon.

Each of the photoelectric conversion elements 22A and 22B includes an APD formed of a p-n junction between an n-type semiconductor region and a p-type semiconductor region provided in a semiconductor substrate. A cathode electrode 26A connected to the cathode of the APD constituting the photoelectric conversion element 22A, an anode electrode (not illustrated) connected to the anode of the APD, and the like are provided on the semiconductor substrate in which the photoelectric conversion element 22A is arranged. Similarly, a cathode electrode 26B connected to the cathode of the APD constituting the photoelectric conversion element 22B, an anode electrode (not illustrated) connected to the anode of the APD, and the like are provided on the semiconductor substrate in which the photoelectric conversion element 22B is arranged. Around each of the photoelectric conversion elements 22A and 22B, an isolation region 28 for electrically isolating the adjacent photoelectric conversion elements 22 from each other is provided. The isolation method of the isolation region 28 may be p-n junction isolation or insulator isolation using silicon oxide or the like. The microlens ML is provided on an optical path of light incident on the photoelectric conversion elements 22A and 22B so as to cover the photoelectric conversion elements 22A and 22B.

By configuring the pixel 12 in this manner, a signal obtained by adding the signal output from the photoelectric conversion element 22A and the signal output from the photoelectric conversion element 22B may be used as an imaging signal. The phase difference may be detected by comparing the signal output from the photoelectric conversion element 22A with the signal output from the photoelectric conversion element 22B. A method of performing focus alignment using this phase difference is called an image plane phase difference detection method. In a case where the photoelectric conversion elements 22A and 22B are arranged adjacent to each other in the horizontal direction, a signal from the photoelectric conversion element on the left side may be referred to as an A-image signal, and a signal from the photoelectric conversion element on the right side may be referred to as a B-image signal. In a case where the photoelectric conversion elements 22A and 22B are arranged adjacent to each other in the vertical direction, a signal from the photoelectric conversion element on the upper side may be referred to as a C-image signal, and a signal from the photoelectric conversion element on the lower side may be referred to as a D-image signal.

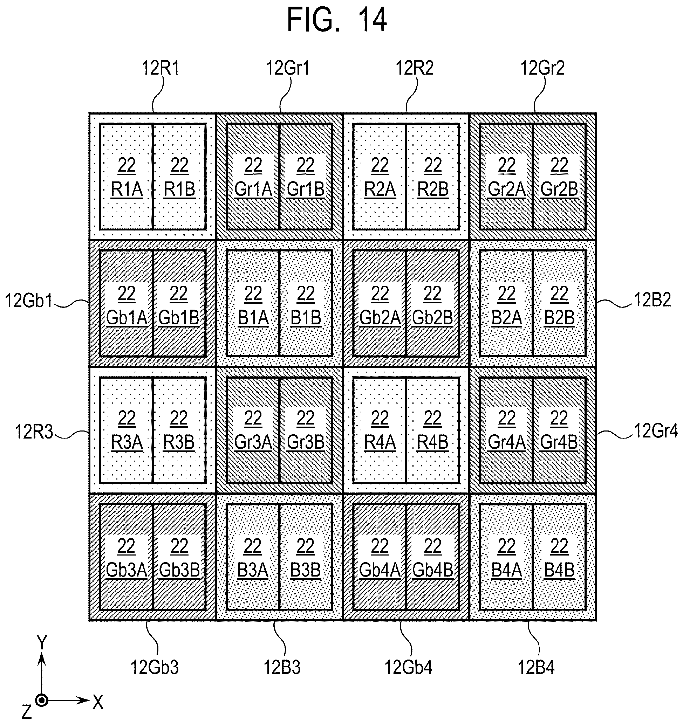

Fig. 14 is a schematic plan view illustrating an arrangement example of the pixels 12 and the photoelectric conversion elements 22 in the sensor substrate 110. Fig. 14 illustrates photoelectric conversion elements 22 of 16 pixels 12 arranged in a matrix of 4 rows × 4 columns among the plurality of pixels 12 constituting the pixel region 10. These pixels 12 have color filters of predetermined colors and are arranged in a Bayer arrangement as in the second embodiment. In FIG. 14, in order to distinguish between the pixels 12 having sensitivity to the same color, consecutive numbers are added to the reference numerals for each color of the color filter that the pixel 12 includes. For example, reference numerals 12R1 and 12R2 are given to the two pixels 12R in the first row, and reference numerals 12Gr1 and 12Gr2 are given to the two pixels 12Gr in the first row. Further, two reference numerals attached to each pixel 12 indicate two photoelectric conversion elements 22 included in the pixel 12. For example, the pixel 12R1 includes a photoelectric conversion element 22R1A and a photoelectric conversion element 22R1B. The two photoelectric conversion elements 22 included in each pixel 12 are arranged in the X direction. The X direction is, for example, a horizontal direction.

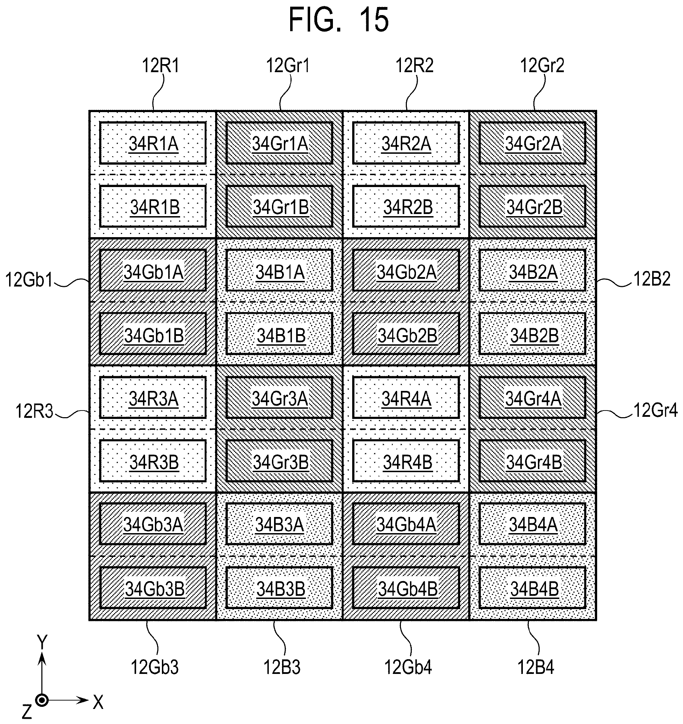

Fig. 15 is a schematic plan view illustrating an arrangement example of the pixels 12 and the counters 34 in the circuit substrate 180. Fig. 15 illustrates the counters 34 of the 16 pixels 12 illustrated in Fig. 14 among the plurality of pixels 12 configuring the pixel region 10. In Fig. 15, as in Fig. 14, in order to distinguish between the pixels 12 having sensitivity to the same color, consecutive numbers are added to the reference numerals for each color of the color filter that the pixels 12 includes. Further, two reference numerals provided in each pixel 12 represent two counters 34 of the pixel 12. For example, the pixel 12R1 includes a counter 34R1A and a counter 34R1B. The two counters 34 included in each pixel 12 are arranged in a direction in which the output line 16 extends, for example, in the Y direction. The Y direction is a direction intersecting the X direction, and is, for example, a vertical direction.

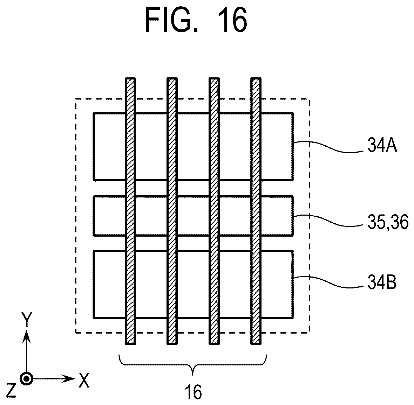

Fig. 16 is a schematic plan view illustrating an arrangement example of the counters 34A and 34B, the selector 35, the output circuit 36, and the output line 16 in each pixel 12. The counters 34A and 34B of one pixel 12 may be arranged in the Y direction so as to sandwich the selector 35 and the output circuit 36. When the configuration example of Fig. 1 is applied as a connection mode of each functional block of the photoelectric conversion device 100, the direction in which the output line 16 extends is parallel to the Y direction. Therefore, the direction in which the counter 34A, the selector 35, the output circuit 36, and the counter 34B are arranged is parallel to the direction in which the output line 16 extends, as illustrated in Fig. 16. With this configuration, an interconnection distance via the selector 35 and the output circuit 36 may be made shorter and uniform with respect to the plurality of signal lines corresponding to each bit of the signal output to the output line 16. When the configuration example of Fig. 2 is applied as a connection mode of each functional block of the photoelectric conversion device 100, the direction in which the output line 16 extends is the X direction. In this case, it is preferable that the two counters 34A and 34B included in each pixel 12 are arranged in the X direction so as to sandwich the selector 35 and the output circuit 36.

In the pixel configuration of the present embodiment, the A-image signal and the B-image signal of one pixel 12 are sequentially output from the same output circuit 36 to the output line 16 in a time division manner.

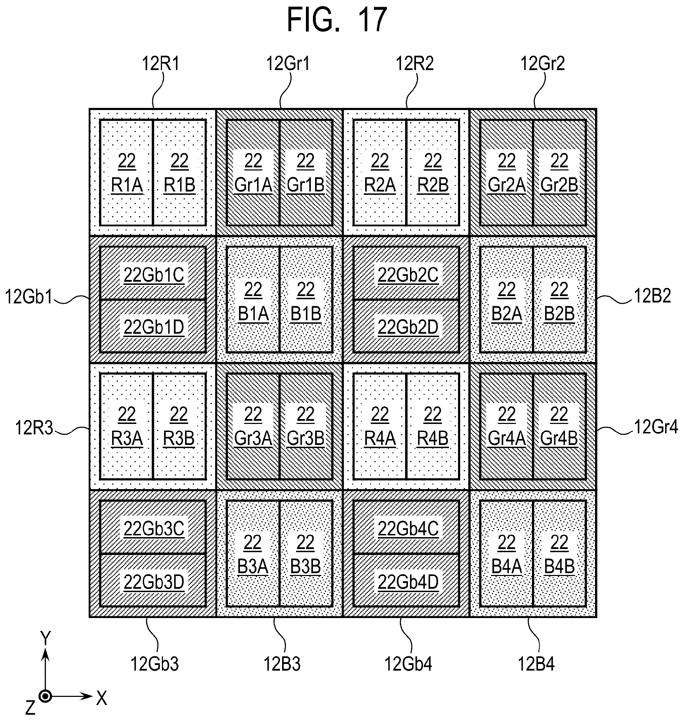

Fig. 17 is a diagram illustrating another arrangement example of the photoelectric conversion elements 22 in the photoelectric conversion device according to the present embodiment. In Fig. 14, the two photoelectric conversion elements 22 included in the pixel 12Gb are arranged in the X direction, whereas in Fig. 17, the two photoelectric conversion elements 22 included in the pixel 12Gb are arranged in the Y direction. The other points are the same as those of the arrangement of Fig. 14. In the present embodiment, the division directions of the pixels 12 of the same color may be the same, and the division direction of each color pixel is not particularly limited. The arrangement of the counters 34A and 34B may be appropriately selected according to the extending direction of the output lines 16 regardless of the arrangement of the photoelectric conversion elements 22.

As described above, according to the present embodiment, in the photoelectric conversion device including the plurality of counters in the pixel circuit, it is possible to suppress an increase in the circuit scale of the pixel circuit and an increase in the signal transfer time.

### Fourth Embodiment

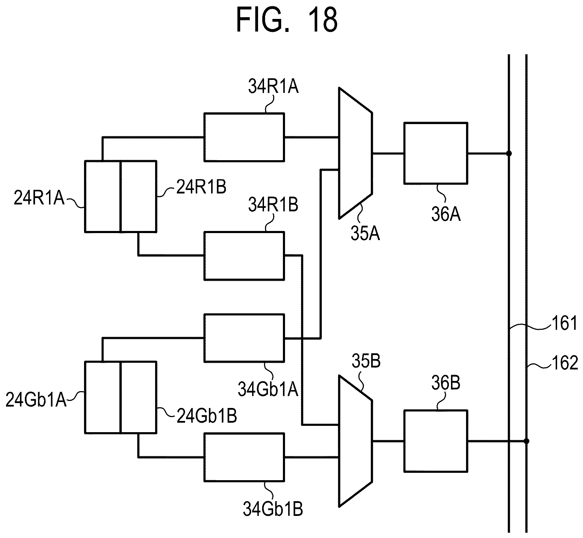

A photoelectric conversion device and a method of driving the same according to a fourth embodiment will be described with reference to Fig. 18 to Fig. 20. The same components as those of the photoelectric conversion devices according to the first to third embodiments are denoted by the same reference numerals, and description thereof will be omitted or simplified.

A photoelectric conversion device according to the present embodiment is the same as the photoelectric conversion device according to the first to third embodiments except that the configuration of the pixel 12 is different. In the present embodiment, differences from the photoelectric conversion devices according to the first to third embodiments will be mainly described, and description of points similar to those of the photoelectric conversion devices according to the first to third embodiments will be appropriately omitted.

In the photoelectric conversion device according to the third embodiment, the A-image signal and the B-image signal of one pixel 12 are sequentially output from the same output circuit 36 to the output line 16 in a time division manner. On the other hand, in the photoelectric conversion device of the present embodiment, the A-image signals of the two pixels 12 are sequentially output from one output circuit 36 to the output line 16 in a time division manner, and the B-image signals of the two pixels 12 are sequentially output from the other one output circuit 36 to the output line 16 in a time division manner.

Fig. 18 is a block diagram illustrating a configuration example of a pixel circuit of the photoelectric conversion device according to the present embodiment. The two pixels 12 each of which outputs the A-image signal via one output circuit 36 and outputs the B-image signal via the other output circuit 36 are two pixels 12 adjacent to each other in the direction in which the output line 16 extends, and examples thereof include pixels 12R1 and 12Gb1 in the pixel layout of Fig. 14. Fig. 18 illustrates a connection relationship between the constituent elements in the pixels 12R1 and 12Gb1. As illustrated in Fig. 18, the A-image signals of the pixels 12R1 and 12Gb1 are output to the output line 161 via the selector 35A and the output circuit 36A. The B-image signals of the pixels 12R1 and 12Gb1 are output to the output line 162 via the selector 35B and the output circuit 36B.

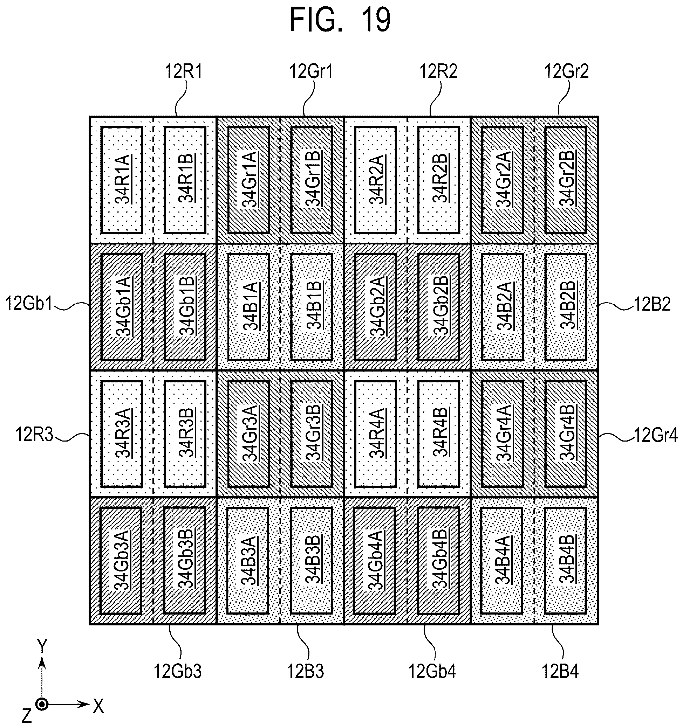

Fig. 19 is a schematic plan view illustrating an arrangement example of the pixels 12 and the counters 34 in the circuit substrate 180. Fig. 19 illustrates the counters 34 of the 16 pixels 12 illustrated in Fig. 14 among the plurality of pixels 12 configuring the pixel region 10. In Fig. 19, as in Fig. 14 and the like, in order to distinguish between the pixels 12 having sensitivity to the same color, consecutive numbers are added to the reference numerals for each color of the color filter that the pixel 12 includes. Further, two reference numerals provided in each pixel 12 represent two counters 34 of the pixel 12. The two counters 34 of each pixel 12 are arranged in the X direction.

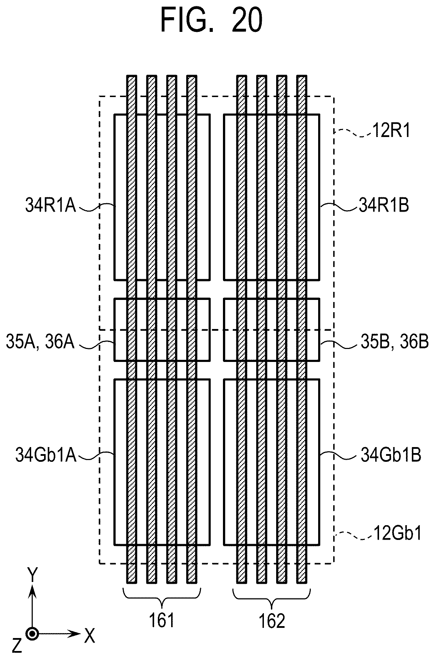

Fig. 20 is a schematic plan view illustrating an arrangement example of the counters 34R1A, 34R1B, 34Gb1A and 34Gb1B, the selectors 35A and 35B, the output circuits 36A and 36B, and the output lines 161 and 162 in the pixels 12R1 and 12Gb1. The counter 34R1A of the pixel 12R1 and the counter 34Gb1A of the pixel 12Gb1 may be arranged in the Y direction so as to sandwich the selector 35A and the output circuit 36A. The counter 34R1B of the pixel 12R1 and the counter 34Gb1B of the pixel 12Gb1 may be arranged in the Y direction so as to sandwich the selector 35B and the output circuit 36B. When the configuration example of Fig. 1 is applied as a connection mode of each functional block of the photoelectric conversion device 100, the direction in which the output lines 161 and 162 extend is parallel to the Y direction. Therefore, with this configuration, the interconnection distance via the selector 35 and the output circuit 36 may be made short and uniform with respect to the plurality of signal lines corresponding to each bit of the signal output to the output line 16.

In the pixel configuration of the present embodiment, since the two output lines 161 and 162 are arranged in each column, the interval between the signal lines constituting the output lines 161 and 162 is narrower than that of the third embodiment. However, since the A-image signal and the B-image signal of each pixel 12 may be output at the same timing, the readout speed may be improved. The effect of sharing the output circuit 36 is the same as those of the previous embodiments, and the circuit area of the output circuit 36 may be reduced.

As described above, according to the present embodiment, in the photoelectric conversion device having the plurality of counters in the pixel circuit, it is possible to suppress an increase in the circuit scale of the pixel circuit and an increase in the signal transfer time.

### Fifth Embodiment

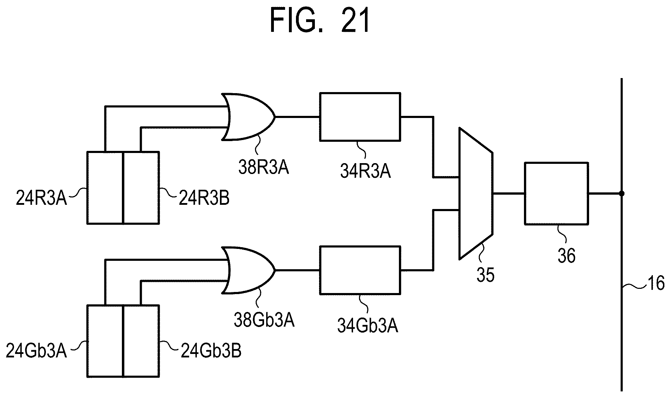

A photoelectric conversion device and a method of driving the same according to a fifth embodiment will be described with reference to Fig. 21 to Fig. 24. The same components as those of the photoelectric conversion devices according to the first to fourth embodiments are denoted by the same reference numerals, and description thereof will be omitted or simplified.

A photoelectric conversion device according to the present embodiment is the same as the photoelectric conversion device according to the first to fourth embodiments except that the configuration of the pixel 12 is different. In the present embodiment, differences from the photoelectric conversion devices according to the first to fourth embodiments will be mainly described, and description of points similar to those of the photoelectric conversion devices according to the first to fourth embodiments will be appropriately omitted.

In the above-described embodiments, the photon detection pulse signal output from one photon detection circuit 24 is counted by one counter 34. In the present embodiment, an example will be described in which the photon detection pulse signals output from the plurality of photon detection circuits 24 are counted by one counter 34. By integrating the signals output from the plurality of photon detection circuits 24 by the signal integration circuit, the photon detection pulse signal superimposed on the integrated signal may be counted by one counter 34. As the signal integration circuit, for example, an OR circuit may be used.

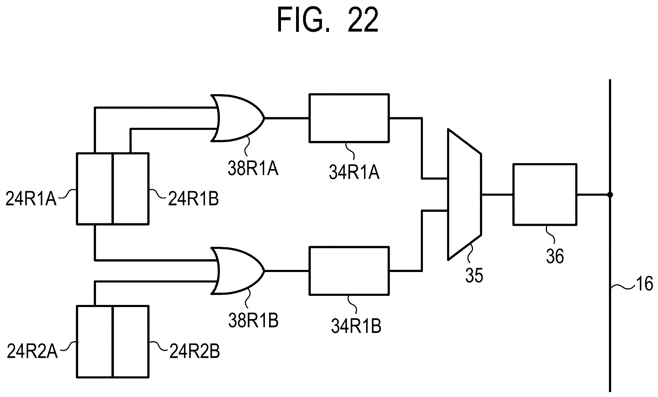

As an example of integrating the signals output from the plurality of photon detection circuits 24, two examples illustrated in Fig. 21 and Fig. 22 will be described here. Fig. 21 and Fig. 22 are block diagrams illustrating a configuration example of a pixel circuit in the photoelectric conversion device according to the present embodiment.

Fig. 21 is a configuration example in which, for each of the two pixels 12, the signal output from the photon detection circuit 24A and the signal output from the photon detection circuit 24B are integrated by the signal integration circuit 38, and then the photon detection pulse signal superimposed on the integrated signal is counted by the counter 34. Since the signal output from the photon detection circuit 24A corresponds to the A-image signal and the signal output from the photon detection circuit 24B corresponds to the B-image signal, a signal obtained by integrating these signals of one pixel 12 becomes an imaging signal.

The pixel circuit of Fig. 21 may be applied to, for example, two pixels 12 arranged in different rows of the same column. In Fig. 21, it is assumed that this configuration is applied to the pixels 12R3 and 12Gb3 in the pixel array of Fig. 14. A photon detection circuit 24R3A and a photon detection circuit 24R3B of the pixel 12R3 are connected to the counter 34R3A via a signal integration circuit 38R3A. Similarly, a photon detection circuit 24Gb3A and a photon detection circuit 24Gb3B of the pixel 12Gb3 are connected to the counter 34Gb3A via a signal integration circuit 38Gb3A. The counter 34R3A and the counter 34Gb3A are connected to the output line 16 via the selector 35 and the output circuit 36. With this configuration, the imaging signal of the pixel 12R3 and the imaging signal of the pixel 12Gb3 may be sequentially output to the output line 16 in a time division manner.

Fig. 22 illustrates a configuration example in which signals output from the photon detection circuits 24A of two pixels 12 are integrated by the signal integration circuit 38, and then photon detection pulse signals superimposed on the integrated signals are counted by the counter 34, in addition to acquisition of imaging signals of one pixel 12. As described above, since the signal output from the photon detection circuit 24A corresponds to the A-image signal and the signal output from the photon detection circuit 24B corresponds to the B-image signal, the signal obtained by integrating these signals of one pixel 12 becomes the imaging signal. Further, by adding and reading out the A-image signals or the B image signals of the two pixels 12, the amount of data to be handled may be reduced, and the readout speed and the signal processing speed may be improved.

The pixel circuit of Fig. 22 is applicable to, for example, two pixels 12 arranged in the same row and having sensitivity to the same color. In Fig. 22, it is assumed that this configuration is applied to the pixels 12R1 and 12R2 in the pixel array of Fig. 14. A photon detection circuit 24R1A and a photon detection circuit 24R1B of the pixel 12R1 are connected to the counter 34R1A via a signal integration circuit 38R1A. A photon detection circuit 24R1A of a pixel 12R1 and the photon detection circuit 24R2A of the pixel 12R2 are connected to the counter 34R1B via a signal integration circuit 38R1B. The counter 34R1A and the counter 34R1B are connected to the output line 16 via the selector 35 and the output circuit 36. With this configuration, the imaging signal of the pixel 12R1 and the phase difference detection signal obtained by adding the A-image signal of the pixel 12R1 and the A-image signal of the pixel 12R2 may be sequentially output to the output line 16 in a time division manner.

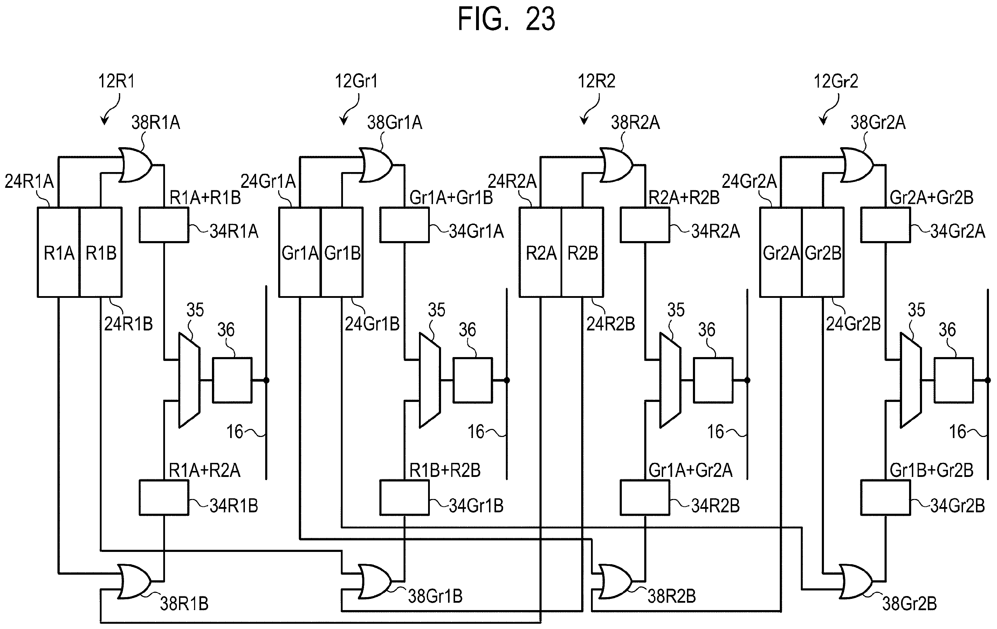

Fig. 23 illustrates a pixel circuit in which the configuration of Fig. 22 is further expanded and applied to the pixels 12R1, 12Gr1, 12R2, and 12Gr2 in the pixel array of Fig. 14. A photon detection circuit 24Gr1A and a photon detection circuit 24Gr1B of the pixel 12Gr1 are connected to the counter 34Gr1A via a signal integration circuit 38Gr1A. A photon detection circuit 24R1B of the pixel 12R1 and a photon detection circuit 24R2B of the pixel 12R2 are connected to the counter 34Gr1B via a signal integration circuit 38Gr1B. With this configuration, the imaging signal of the pixel Gr1 and the phase difference detection signal obtained by adding the B-image signal of the pixel 12R1 and the B-image signal of the pixel 12R2 may be sequentially output to the output line 16 in a time division manner.

A photon detection circuit 24R2A and a photon detection circuit 24R2B of the pixel 12R2 are connected to the counter 34R2A via a signal integration circuit 38R2A. A photon detection circuit 24Gr1A of the pixel 12Gr1 and a photon detection circuit 24Gr2A of the pixel 12Gr2 are connected to the counter 34R2B via a signal integration circuit 38R2B. With this configuration, the imaging signal of the pixel R2, and the phase difference detection signal obtained by adding the A-image signal of the pixel 12Gr1 and the A-image signal of the pixel 12Gr2 may be sequentially output to the output line 16 in a time division manner.

A photon detection circuit 24Gr2A and a photon detection circuit 24Gr2B of the pixel 12Gr2 are connected to the counter 34Gr2A via a signal integration circuit 38Gr2A. A photon detection circuit 24Gr1B of the pixel 12Gr1 and a photon detection circuit 24Gr2B of the pixel 12Gr2 are connected to the counter 34Gr2B via a signal integration circuit 38Gr2B. With this configuration, the imaging signal of the pixel Gr2 and the phase difference detection signal obtained by adding the B-image signal of the pixel 12Gr1 and the B-image signal of the pixel 12Gr2 may be sequentially output to the output line 16 in a time-division manner.

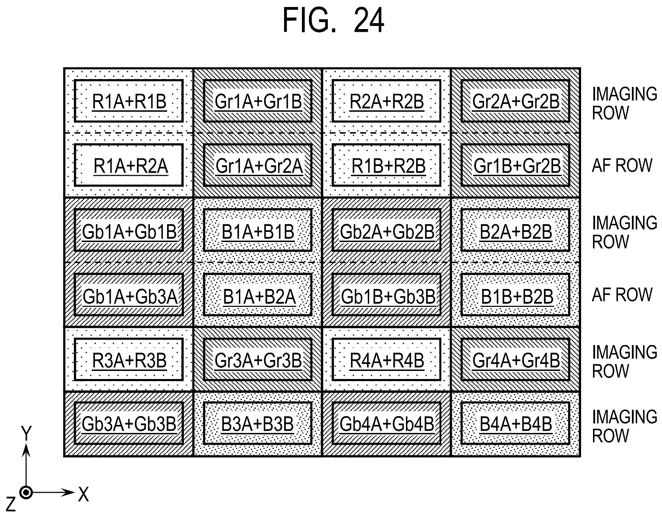

Fig. 24 is a schematic plan view illustrating an arrangement example of the pixels 12 and the counters 34 in the circuit substrate 180 and illustrates an example of a signal processed in each of the counters 34A and 34B of the 16 pixels 12 illustrated in Fig. 15. In Fig. 24, the pixel circuit of Fig. 21 is applied to each of the pixel 12R3 and the pixel 12Gb3, the pixel 12Gr3 and the pixel 12B3, the pixel 12R4 and the pixel 12Gb4, and the pixel 12Gr4 and the pixel 12B4. The pixel circuit in Fig. 22 is applied to each of the pixel 12R1 and the pixel 12R2, the pixel 12Gr1 and the pixel 12Gr2, the pixel 12Gb1 and the pixel 12Gb2, and the pixel 12B1 and the pixel 12B2. As illustrated in Fig. 24, in the present embodiment, in order to reduce the density of the pixel circuits, the pixel circuits are arranged so that the pixel circuits for six rows are arranged instead of the pixel circuits for eight rows.

The pixel circuit in Fig. 21 and the pixel circuit in Fig. 22 may be selected as appropriate in accordance with the type of a signal to be read out from the row. That is, the pixel circuit of Fig. 22 may be applied to the pixels 12 in the row that outputs both the imaging signal and the phase difference detection signal, and the pixel circuit of Fig. 21 may be applied to the pixels 12 in the row that outputs only the imaging signal and decimates the phase difference detection signal. In the example of Fig. 24, the imaging signal and the phase difference detection signal may be output from the first row and the second row, and only the imaging signal may be output from the third row and the fourth row.

Alternatively, the pixels 12 in each row may be configured by the pixel circuit illustrated in Fig. 22, and one of the output of the imaging signal, the output of the phase difference detection signal, and the output of the imaging signal and the phase difference detection signal may be selected for each row. However, in the case where the pixel circuit of Fig. 21 is configured to output only the imaging signal, the number of counters 34 required for each pixel 12 is one, and thus there is an advantage in that the area of the counter circuit may be reduced as compared with the case where the pixel circuit of Fig. 22 is configured to output only the imaging signal.

In the first row and the second row to which the pixel circuit of Fig. 22 is applied, it is preferable that the imaging signals of the respective columns of the same row may be output at the same timing. In addition, it is preferable that the phase difference detection signals of the respective columns in the same row may be output at the same timing. That is, it is preferable that each of the pixels 12 output the imaging signal when the control signal SEL is at the first level and output the phase difference detection signal when the control signal SEL is at the second level. With this configuration, when one of the imaging signal and the phase difference detection signal is unnecessary, the degree of freedom may be improved by thinning out the one.

As described above, according to the present embodiment, in the photoelectric conversion device including the plurality of counters in the pixel circuit, it is possible to suppress an increase in the circuit scale of the pixel circuit and an increase in the signal transfer time.

### Sixth Embodiment

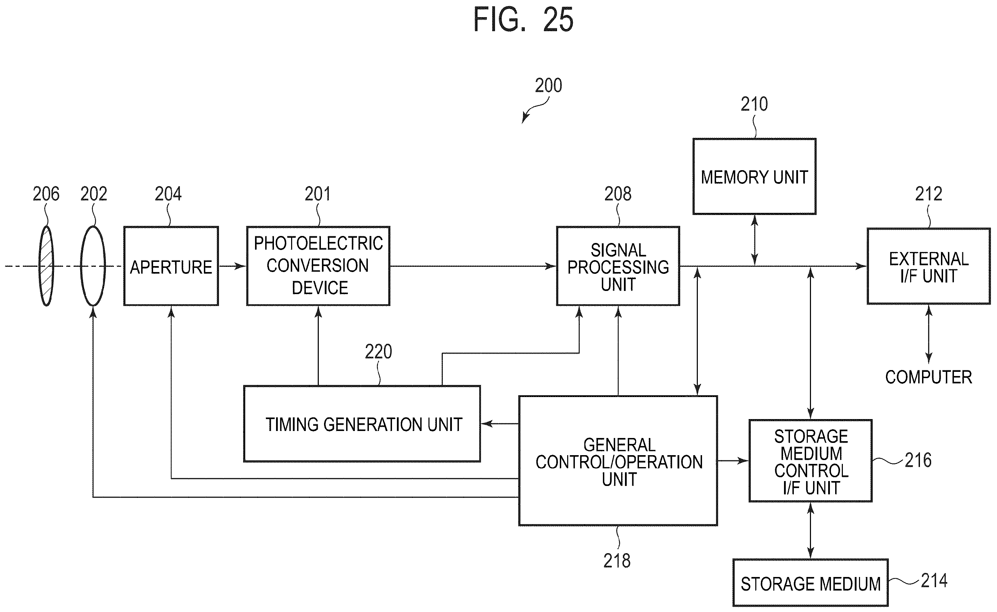

A photodetection system according to a sixth embodiment will be described with reference to Fig. 25. Fig. 25 is a block diagram illustrating a schematic configuration of a photodetection system according to the present embodiment. In the present embodiment, a photodetection sensor to which the photoelectric conversion device 100 according to any one of the first to fifth embodiments is applied will be described.

The photoelectric conversion device 100 described in the first to fifth embodiments may be applied to various photodetection systems. Examples of applicable photodetection systems include imaging systems such as digital still cameras, digital camcorders, surveillance cameras, copying machines, facsimiles, mobile phones, on-vehicle cameras, observation satellites, and the like. A camera module including an optical system such as a lens and an imaging device is also included in the photodetection system. Fig. 25 exemplifies a block diagram of a digital still camera as one of these.

The photodetection system 200 illustrated in Fig. 25 includes a photoelectric conversion device 201, a lens 202 that forms an optical image of an object on the photoelectric conversion device 201, an aperture 204 for varying the amount of light passing through the lens 202, and a barrier 206 for protecting the lens 202. The lens 202 and the aperture 204 constitute an optical system that focuses light onto the photoelectric conversion device 201. The photoelectric conversion device 201 is the photoelectric conversion device 100 described in any one of the first to fifth embodiments and converts the optical image formed by the lens 202 into image data.

The photodetection system 200 further includes a signal processing unit 208 that processes an output signal output from the photoelectric conversion device 201. The signal processing unit 208 generates image data from the digital signal output from the photoelectric conversion device 201. Further, the signal processing unit 208 performs various corrections and compressions as necessary and outputs the processed image data. The photoelectric conversion device 201 may include an AD conversion unit that generates a digital signal to be processed by the signal processing unit 208. The AD conversion unit may be formed on a semiconductor layer (semiconductor substrate) on which the photoelectric conversion elements of the photoelectric conversion device 201 are formed or may be formed on a semiconductor layer different from the semiconductor layer on which the photoelectric conversion elements of the photoelectric conversion device 201 are formed. The signal processing unit 208 may be formed on the same semiconductor layer as the photoelectric conversion device 201.

The photodetection system 200 further includes a buffer memory unit 210 for temporarily storing image data, and an external interface unit (external I/F unit) 212 for communicating with an external computer or the like. Further, the photodetection system 200 may include a storage medium 214 such as a semiconductor memory for performing storing or reading out of imaging data, and a storage medium control interface unit (storage medium control I/F unit) 216 for performing storing on or reading out from the storage medium 214. The storage medium 214 may be built in the photodetection system 200 or may be detachable. Communication between the storage medium control I/F unit 216 and the storage medium 214 and communication from the external I/F unit 212 may be performed wirelessly.

The photodetection system 200 further includes a general control/operation unit 218 that performs various calculations and controls the entire digital still camera, and a timing generation unit 220 that outputs various timing signals to the photoelectric conversion device 201 and the signal processing unit 208. Here, the timing signal or the like may be input from the outside, and the photodetection system 200 may include at least the photoelectric conversion device 201 and the signal processing unit 208 that processes the output signal output from the photoelectric conversion device 201. The timing generation unit 220 may be mounted on the photoelectric conversion device 201. Further, the general control/operation unit 218 and the timing generation unit 220 may be configured to perform a part or all of the control functions of the photoelectric conversion device 201.

The photoelectric conversion device 201 outputs an imaging signal to the signal processing unit 208. The signal processing unit 208 performs predetermined signal processing on the imaging signal output from the photoelectric conversion device 201, and outputs image data. The signal processing unit 208 generates an image using the imaging signal. The signal processing unit 208 may be configured to perform distance measurement calculation on the signal output from the photoelectric conversion device 201.

As described above, according to the present embodiment, by constituting the photodetection system using the photoelectric conversion devices according to any one of the first to fifth embodiments, it is possible to realize a photodetection system capable of acquiring a higher quality image.

### Seventh Embodiment

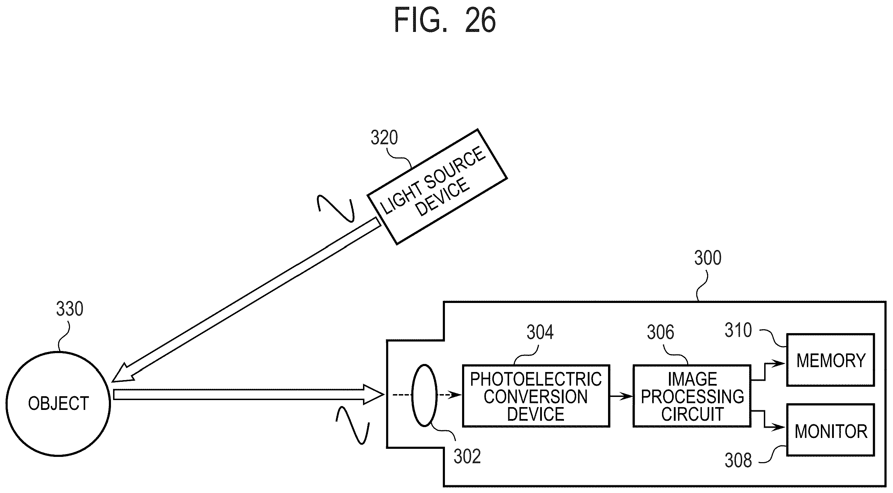

A range image sensor according to a seventh embodiment will be described with reference to Fig. 26. Fig. 26 is a block diagram illustrating a schematic configuration of a range image sensor according to the present embodiment. In the present embodiment, a range image sensor will be described as an example of a photodetection system to which the photoelectric conversion device 100 according to any one of the first to fifth embodiments is applied.

As illustrated in Fig. 26, the range image sensor 300 according to the present embodiment may include an optical system 302, a photoelectric conversion device 304, an image processing circuit 306, a monitor 308, and a memory 310. The range image sensor 300 receives light (modulated light or pulsed light) emitted from the light source device 320 toward an object 330 and reflected on the surface of the object 330 and acquires a distance image corresponding to the distance to the object 330.

The optical system 302 includes one or a plurality of lenses and has a function of forming an image of image light (incident light) from the object 330 on a light receiving surface (sensor unit) of the photoelectric conversion device 304.

The photoelectric conversion device 304 is the photoelectric conversion device 100 described in any one of the first to fifth embodiments and has a function of generating a distance signal indicating a distance to the object 330 based on image light from the object 330 and supplying the generated distance signal to the image processing circuit 306.

The image processing circuit 306 has a function of performing image processing for constructing a distance image based on the distance signal supplied from the photoelectric conversion device 304.

The monitor 308 has a function of displaying a distance image (image data) obtained by image processing in the image processing circuit 306. The memory 310 has a function of storing (recording) a distance image (image data) obtained by image processing in the image processing circuit 306.

As described above, according to the present embodiment, by constituting the range image sensor using the photoelectric conversion devices according to any one of the first to fifth embodiments, it is possible to realize a range image sensor capable of acquiring a range image including more accurate range information in conjunction with improvement in characteristics of the pixels 12.

### Eighth Embodiment

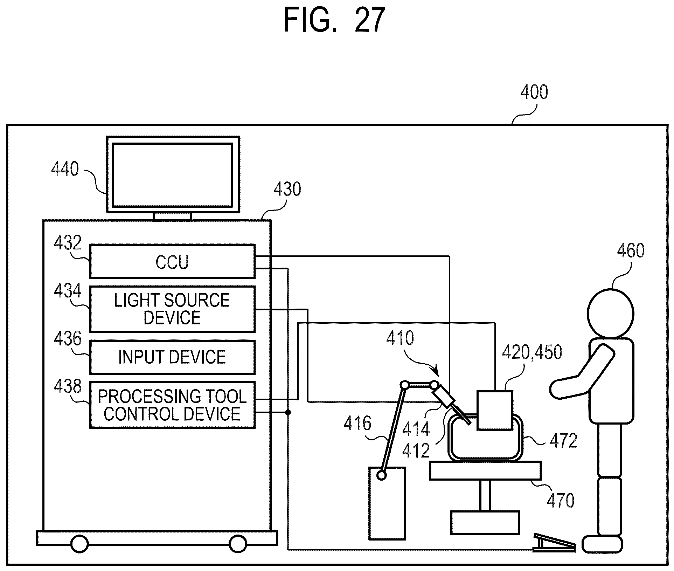

An endoscopic surgical system according to an eighth embodiment will be described with reference to Fig. 27. Fig. 27 is a schematic diagram illustrating a configuration example of an endoscopic surgical system according to the present embodiment. In the present embodiment, an endoscopic surgical system will be described as an example of a photodetection system to which the photoelectric conversion device 100 according to any one of the first to fifth embodiments is applied.

Fig. 27 illustrates a state in which an operator (surgeon) 460 performs surgery on a patient 472 on a patient bed 470 using an endoscopic surgical system 400.

As illustrated in Fig. 27, the endoscopic surgical system 400 according to the present embodiment may include an endoscope 410, a surgical tool 420, and a cart 430 on which various devices for endoscopic surgery are mounted. A camera control unit (CCU) 432, a light source device 434, an input device 436, a processing tool control device 438, a display device 440, and the like may be mounted on the cart 430.

The endoscope 410 includes a lens barrel 412 in which an area of a predetermined length from the tip is inserted into a body cavity of the patient 472, and a camera head 414 connected to the base end of the lens barrel 412. Although Fig. 27 illustrates an endoscope 410 configured as a so-called rigid mirror having a rigid lens barrel 412, the endoscope 410 may be configured as a so-called flexible mirror having a flexible lens barrel. The endoscope 410 is held in a movable state by an arm 416.

The tip of the lens barrel 412 is provided with an opening into which an objective lens is fitted. A light source device 434 is connected to the endoscope 410, and light generated by the light source device 434 is guided to the tip of the lens barrel 412 by a light guide extended inside the lens barrel and is irradiated toward an observation target in the body cavity of the patient 472 through the objective lens. Note that the endoscope 410 may be a direct-viewing mirror, an oblique-viewing mirror, or a side-viewing mirror.

An optical system and a photoelectric conversion device (not illustrated) are provided inside the camera head 414, and reflected light (observation light) from the observation target is focused on the photoelectric conversion device by the optical system. The photoelectric conversion device photoelectrically converts the observation light and generates an electrical signal corresponding to the observation light, that is, an image signal corresponding to the observation image. As the photoelectric conversion device, the photoelectric conversion device 100 described in any one of the first to fifth embodiments may be used. The image signal is transmitted to the CCU 432 as RAW data.

The CCU 432 may be configured by a central processing unit (CPU), a graphics processing unit (GPU), or the like and integrally controls operations of the endoscope 410 and the display device 440. Further, the CCU 432 receives an image signal from the camera head 414 and performs various types of image processing for displaying an image based on the image signal, such as development processing (demosaic processing), on the image signal.

The display device 440 displays an image based on the image signal subjected to the image processing by the CCU 432 under the control of the CCU 432.

The light source device 434 may be configured by, for example, a light source such as a light emitting diode (LED) and supplies irradiation light to the endoscope 410 when photographing a surgical part or the like.

The input device 436 is an input interface to the endoscopic surgical system 400. The user may input various kinds of information and input instructions to the endoscopic surgical system 400 via the input device 436.

The processing tool control device 438 controls the driving of the energy processing tool 450 for tissue ablation, incision, blood vessel sealing, or the like.

The light source device 434 that supplies irradiation light to the endoscope 410 when imaging the surgical part may be configured by, for example, a white light source configured by an LED, a laser light source, or a combination thereof. When the white light source is configured by a combination of RGB laser light sources, since the output intensity and the output timing of each color (each wavelength) may be controlled with high accuracy, the white balance of the captured image may be adjusted in the light source device 434. In addition, in this case, it is also possible to capture an image corresponding to each of RGB in a time division manner by irradiating the observation target with laser light from each of the RGB laser light sources in a time division manner and controlling driving of the imaging element of the camera head 414 in synchronization with the irradiation timing. According to this method, a color image may be obtained without providing a color filter in the image sensor.

Further, the driving of the light source device 434 may be controlled so as to change the intensity of light to be output every predetermined time. By controlling the driving of the image sensor of the camera head 414 in synchronization with the timing of the change of the intensity of the light to acquire an image in a time-division manner and compositing the image, it is possible to generate an image having a high dynamic range free from so-called blacked up shadows and blown out highlights.

The light source device 434 may be configured to be capable of supplying light in a predetermined wavelength band corresponding to special light observation. In the special light observation, for example, wavelength dependency of absorption of light in body tissue is utilized. Specifically, a predetermined tissue such as a blood vessel in the superficial layer of a mucous membrane is photographed with high contrast by irradiating light in a narrow band as compared with irradiation light (that is, white light) at the time of normal observation. Alternatively, in the special light observation, fluorescence observation in which an image is obtained by fluorescence generated by irradiation with excitation light may be performed. In the fluorescence observation, a body tissue is irradiated with excitation light to observe fluorescence from the body tissue, or a body tissue is locally injected with a reagent such as indocyanine green (ICG), and the body tissue is irradiated with excitation light corresponding to a fluorescence wavelength of the reagent to obtain a fluorescence image. The light source device 434 may be configured to be capable of supplying narrowband light and/or excitation light corresponding to such special light observation.

As described above, according to the present embodiment, by constituting the endoscopic surgical system using the photoelectric conversion device according to any one of the first to fifth embodiments, it is possible to realize an endoscopic surgical system capable of acquiring a better quality image.

### Ninth Embodiment

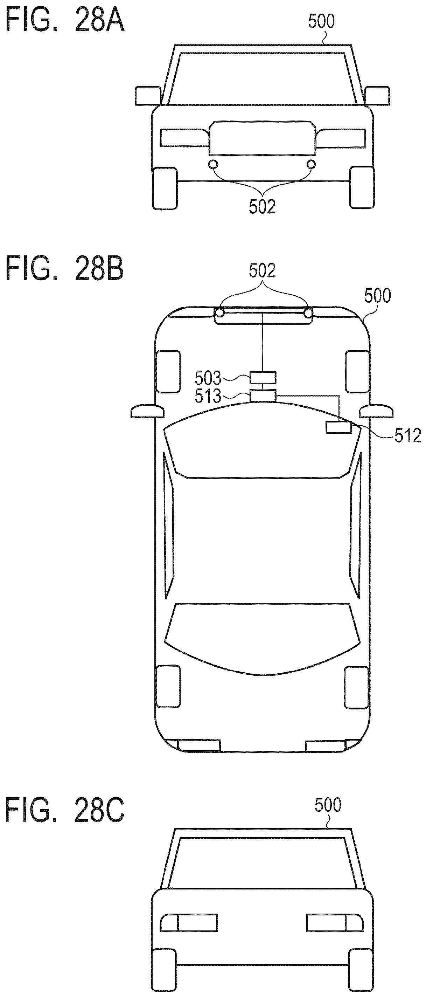

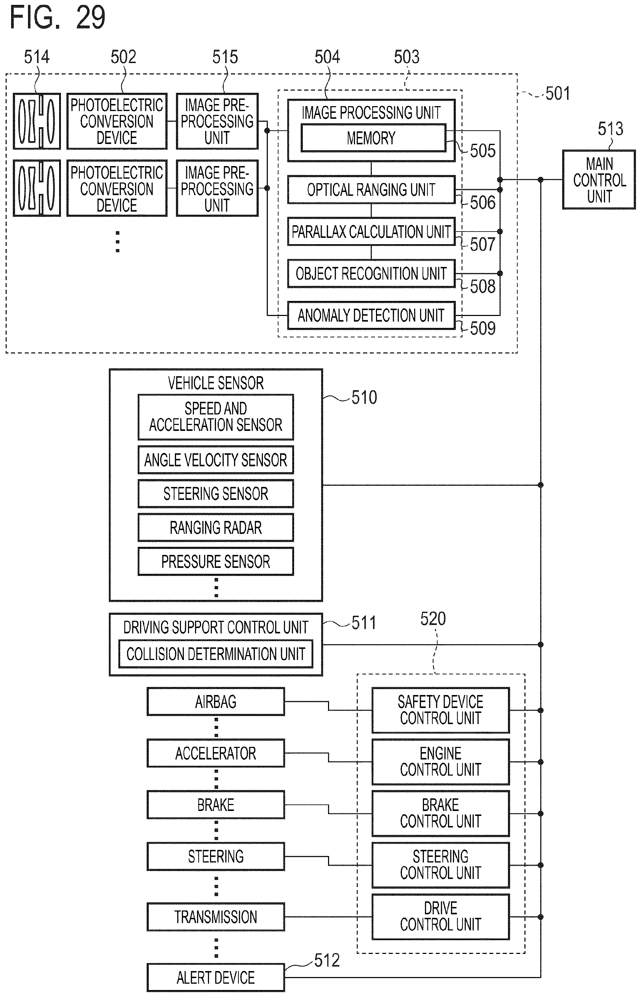

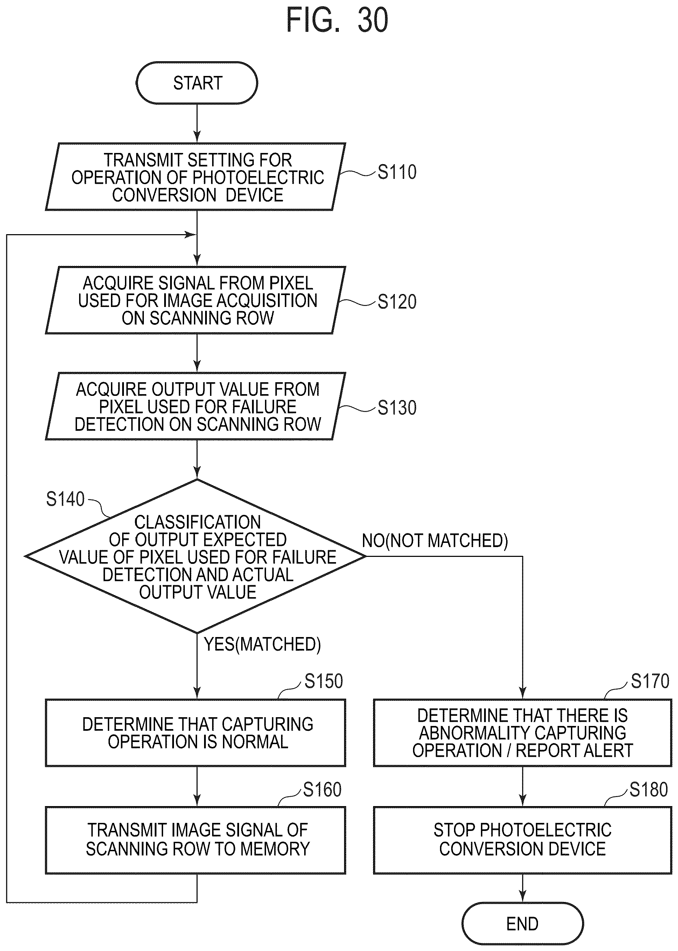

A photodetection system and a movable object according to a ninth embodiment will be described with reference to Fig. 28A to Fig. 30. Fig. 28A to Fig. 28C are schematic diagrams illustrating a configuration example of a movable object according to the present embodiment. Fig. 29 is a block diagram illustrating a schematic configuration of a photodetection system according to the present embodiment. Fig. 30 is a flowchart illustrating an operation of the photodetection system according to the present embodiment. In the present embodiment, an application example to an on-vehicle camera will be described as a photodetection system to which the photoelectric conversion device 100 according to any one of the first to fifth embodiments is applied.

Fig. 28A to Fig. 28C are schematic diagrams illustrating a configuration example of a movable object (vehicle system) according to the present embodiment. Fig. 28A to Fig. 28C illustrate a configuration of a vehicle 500 (automobile) as an example of a vehicle system incorporating a photodetection system to which the photoelectric conversion device according to any one of the first to fifth embodiments is applied. Fig. 28A is a schematic front view of the vehicle 500, Fig. 28B is a schematic plan view of the vehicle 500, and Fig. 28C is a schematic rear view of the vehicle 500. The vehicle 500 includes a pair of photoelectric conversion devices 502 on a front face thereof. Here, the photoelectric conversion device 502 is the photoelectric conversion device 100 described in any one of the first to fifth embodiments. The vehicle 500 includes an integrated circuit 503, an alert device 512, and a main control unit 513.

Fig. 29 is a block diagram illustrating a configuration example of the photodetection system 501 mounted on the vehicle 500. The photodetection system 501 includes photoelectric conversion devices 502, image preprocessing units 515, an integrated circuit 503, and optical systems 514. The photoelectric conversion device 502 is the photoelectric conversion device 100 described in any one of the first to fifth embodiments. The optical system 514 forms an optical image of an object on the photoelectric conversion device 502. The photoelectric conversion device 502 converts the optical image of the object formed by the optical system 514 into an electrical signal. The image preprocessing unit 515 performs predetermined signal processing on the signal output from the photoelectric conversion device 502. The function of the image preprocessing unit 515 may be incorporated in the photoelectric conversion device 502. At least two sets of the optical system 514, the photoelectric conversion device 502, and the image preprocessing unit 515 are provided in the photodetection system 501, and an output from the image preprocessing unit 515 of each set is input to the integrated circuit 503.

The integrated circuit 503 is an integrated circuit for an imaging system application, and includes an image processing unit 504, an optical ranging unit 506, a parallax calculation unit 507, an object recognition unit 508, and an abnormality detection unit 509. The image processing unit 504 processes the image signal output from the image preprocessing unit 515. For example, the image processing unit 504 performs image processing such as development processing and defect correction on the output signal of the image preprocessing unit 515. The image processing unit 504 includes a memory 505 that temporarily holds the image signal. In the memory 505, for example, the position of a known defective pixel in the photoelectric conversion device 502 may be stored.

The optical ranging unit 506 performs focusing and distance measurement of the object. The parallax calculation unit 507 calculates distance measurement information (distance information) from a plurality of image data (parallax images) acquired by the plurality of photoelectric conversion devices 502. Each of the photoelectric conversion devices 502 may have a configuration capable of acquiring various kinds of information such as distance information. The object recognition unit 508 recognizes an object such as a vehicle, a road, a sign, or a person. Upon detecting an abnormality in the photoelectric conversion device 502, the abnormality detection unit 509 notifies the main control unit 513 of the abnormality.

The integrated circuit 503 may be realized by dedicatedly designed hardware, may be realized by a software module, or may be realized by a combination thereof. Further, it may be realized by a field programmable gate array (FPGA), an application specific integrated circuit (ASIC), or the like, or may be realized by a combination of these.

The main control unit 513 integrally controls the operations of the photodetection system 501, the vehicle sensor 510, the control unit 520, and the like. The vehicle 500 may not include the main control unit 513. In this case, the photoelectric conversion device 502, the vehicle sensor 510, and the control unit 520 transmit and receive control signals via a communication network. For example, the controller area network (CAN) standard may be applied to the transmission and reception of the control signals.

The integrated circuit 503 has a function of receiving a control signal from the main control unit 513 or transmitting a control signal or a setting value to the photoelectric conversion device 502 by its own control unit.

The photodetection system 501 is connected to the vehicle sensor 510 and may detect a traveling state of the host vehicle such as a vehicle speed, a yaw rate, and a steering angle, an environment outside the host vehicle, and states of other vehicles and obstacles. The vehicle sensor 510 is also a distance information acquisition unit that acquires distance information to the object. In addition, the photodetection system 501 is connected to a driving support control unit 511 that performs various kinds of driving support such as automatic steering, automatic traveling, and a collision prevention function. In particular, with respect to the collision determination function, the driving support control unit 511 estimates the collision with other vehicles or obstacles and determines whether or not there is a collision with other vehicles or obstacles based on the detection results of the photodetection system 501 and the vehicle sensor 510. Thus, avoidance control when a collision is estimated and activation of the safety device at the time of the collision are performed.

The photodetection system 501 is also connected to an alert device 512 that issues an alert to the driver based on the determination result of the collision determination unit. For example, when the determination result of the collision determination unit is that the possibility of a collision is high, the main control unit 513 performs vehicle control for avoiding a collision and reducing damage by applying a brake, returning an accelerator, suppressing engine output, or the like. The alert device 512 alerts the user by sounding an alarm such as a sound, displaying alert information on a display screen of a car navigation system, a meter panel, or the like, or vibrating a seat belt or a steering wheel.

In the present embodiment, an image of the surroundings of the vehicle, for example, the front or the rear, is captured by the photodetection system 501. Fig. 28B illustrates an arrangement example of the photodetection system 501 in a case where the photodetection system 501 captures an image in front of the vehicle.

As described above, the photoelectric conversion devices 502 are arranged in front of the vehicle 500. Specifically, it is preferable that a center line with respect to an advancing/retreating direction or an outer shape (for example, a vehicle width) of the vehicle 500 is regarded as a symmetry axis, and two photoelectric conversion devices 502 are arranged line-symmetrically with respect to the symmetry axis in order to acquire distance information between the vehicle 500 and an object to be imaged and determine a possibility of collision. In addition, the photoelectric conversion devices 502 are preferably arranged so as not to interfere with the driver's visual field when the driver visually recognizes a situation outside the vehicle 500 from the driver's seat. The alert device 512 is preferably arranged so as to easily enter the field of view of the driver.

Next, a failure detection operation of the photoelectric conversion device 502 in the photodetection system 501 will be described with reference to Fig. 30. The failure detection operation of the photoelectric conversion device 502 may be performed in accordance with steps S110 to S180 illustrated in Fig. 30.

Step S110 is a step of performing setting at the time of start-up of the photoelectric conversion device 502. That is, the setting for the operation of the photoelectric conversion device 502 is transmitted from the outside of the photodetection system 501 (for example, the main control unit 513) or the inside of the photodetection system 501, and the imaging operation and the failure detection operation of the photoelectric conversion device 502 are started.

Next, in step S120, pixel signals are acquired from the effective pixels. In step S130, an output value from a failure detection pixel provided for failure detection is acquired. The failure detection pixel may include a photoelectric conversion element in the same manner as the effective pixel. A predetermined voltage is written to the photoelectric conversion element of the failure detection pixel. The failure detection pixel outputs a signal corresponding to the voltage written in the photoelectric conversion element. Note that step S120 and step S130 may be reversed.

Next, in step S140, a classification of the output expected value of the failure detection pixel and the actual output value from the failure detection pixel is performed. As a result of the classification in step S140, in a case where the output expected value matches the actual output value, the process proceeds to step S150, it is determined that the imaging operation is normally performed, and the process step proceeds to step S160. In step S160, the pixel signals of the scanning row are transmitted to the memory 505 and temporarily stored. After that, the process returns to step S120 to continue the failure detection operation. On the other hand, as a result of the classification in step S140, in a case where the output expected value does not coincide with the actual output value, the process proceeds to step S170. In step S170, it is determined that there is an abnormality in the imaging operation, and an alert is notified to the main control unit 513 or the alert device 512. The alert device 512 causes the display unit to display that an abnormality has been detected. Thereafter, in step S180, the photoelectric conversion device 502 is stopped, and the operation of the photodetection system 501 is ended.

In the present embodiment, an example in which the flowchart is looped for each row is described, but the flowchart may be looped for each plurality of rows, or the failure detection operation may be performed for each frame. The alert of step S170 may be notified to the outside of the vehicle via a wireless network.

In addition, in the present embodiment, the control in which the own vehicle does not collide with another vehicle has been described, but the present embodiment is also applicable to control in which the own vehicle follows another vehicle and performs automatic driving, control in which the vehicle performs automatic driving so as not to protrude from a lane, and the like. Further, the photodetection system 501 is not limited to a vehicle such as an own vehicle and may be applied to, for example, other movable object (mobile device) of a ship, an aircraft, an industrial robot, or the like. In addition, the present embodiment is not limited to the movable object and may be widely applied to equipment using object recognition, such as intelligent transport systems (ITS).

### Tenth Embodiment

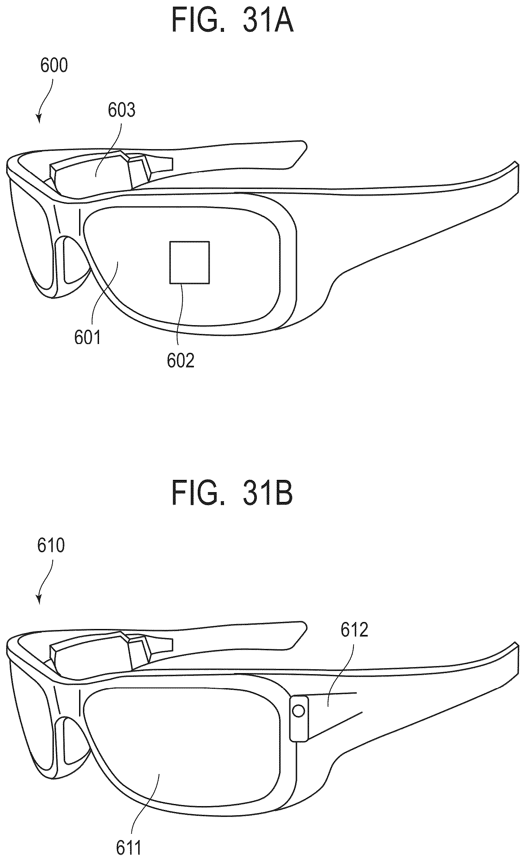

A photodetection system according to a tenth embodiment will be described with reference to Fig. 31A and Fig. 31B. Fig. 31A and Fig. 31B are schematic diagrams illustrating configuration examples of the photodetection system according to the present embodiment. In the present embodiment, an application example to eyeglasses (smart glasses) will be described as a photodetection system to which the photoelectric conversion device 100 of any one of the first to fifth embodiments is applied.

Fig. 31A illustrates eyeglasses 600 (smart glasses) according to one application example. The eyeglasses 600 include lenses 601, a photoelectric conversion device 602, and a control device 603.

The photoelectric conversion device 602 is the photoelectric conversion device 100 described in any one of the first to fifth embodiments and is provided on the lens 601. One photoelectric conversion device 602 may be provided, or a plurality of photoelectric conversion devices may be provided. When a plurality of photoelectric conversion devices 602 are used, a combination of a plurality of types of photoelectric conversion devices 602 may be used. The arrangement position of the photoelectric conversion device 602 is not limited to that in Fig. 31A. A display device (not illustrated) including a light emitting device such as an organic light emitting diode (OLED) or a light emitting diode (LED) may be provided on the back surface side of the lens 601.

The control device 603 functions as a power supply that supplies power to the photoelectric conversion device 602 and the display device. The control device 603 has a function of controlling the operations of the photoelectric conversion device 602 and the display device. The lens 601 may be provided with an optical system for focusing light on the photoelectric conversion device 602.

Fig. 31B illustrates eyeglasses 610 (smart glasses) according to another application example. The eyeglasses 610 include lenses 611 and a control device 612. A photoelectric conversion device (not illustrated) corresponding to the photoelectric conversion device 602 and the display device may be mounted on the control device 612.

The lens 611 is provided with a photoelectric conversion device in the control device 612 and an optical system for projecting light from the display device, and an image is projected thereon. The control device 612 functions as a power supply that supplies power to the photoelectric conversion device and the display device and has a function of controlling operations of the photoelectric conversion device and the display device.

The control device 612 may further include a line-of-sight detection unit that detects the line of sight of the wearer. In this case, an infrared light emitting unit may be provided in the control device 612, and infrared light emitted from the infrared light emitting unit may be used for detection of a line of sight. Specifically, the infrared light emitting unit emits infrared light to the eyeball of the user who is watching at the display image. A captured image of the eyeball is obtained by detecting reflected light of the emitted infrared light from the eyeball by an imaging unit having a light receiving element. By providing a reduction unit that reduces light from the infrared light emitting unit to the display unit in a plan view, it is possible to reduce degradation of image quality.

The line of sight of the user with respect to the display image may be detected from the captured image of the eyeball obtained by capturing the infrared light. Any known technique may be applied to the line-of-sight detection using the captured image of the eyeball. As an example, a line-of-sight detection method based on a Purkinje image due to reflection of irradiation light on the cornea may be used. More specifically, the line-of-sight detection process based on the pupil corneal reflection method is performed. The line of sight of the user may be detected by calculating a line-of-sight vector representing the orientation (rotation angle) of the eyeball based on the image of the pupil included in the captured image of the eyeball and the Purkinje image using the pupil corneal reflex method.

The display device according to the present embodiment may include a photoelectric conversion device having a light receiving element and may be configured to control a display image based on line-of-sight information of a user from the photoelectric conversion device. Specifically, the display device determines, based on the line-of-sight information, a first viewing area that the user gazes at and a second viewing area other than the first viewing area. The first viewing area and the second viewing area may be determined by a control device of the display device or may be determined by an external control device. In a case where the determination is made by the external control device, the determination result is transmitted to the display device via communication. In the display area of the display device, the display resolution of the first viewing area may be controlled to be higher than the display resolution of the second viewing area. That is, the resolution of the second viewing area may be lower than the resolution of the first viewing area.

The display area may include a first display area and a second display area different from the first display area, and an area having a high priority may be determined from the first display area and the second display area based on the line-of-sight information. The first display area and the second display area may be determined by a control device of the display device or may be determined by an external control device. In a case where the determination is made by the external control device, the determination result is transmitted to the display device via communication. The resolution of the high priority area may be controlled to be higher than the resolution of the area other than the high priority area. That is, the resolution of the area having a relatively low priority may be lowered.

Note that artificial intelligence (AI) may be used to determine the first viewing area or the area with a high priority. The Al may be a model configured to estimate an angle of the line of sight and a distance to a target object ahead of the line of sight from the image of the eyeball using the image of the eyeball and the direction in which the eyeball of the image is actually viewed as teacher data. The Al program may be included in the display device, the photoelectric conversion device, or the external device. In a case where the external device has a program, the information may be transmitted to the display device via communication.

In the case of performing display control based on visual recognition detection, the present disclosure may be preferably applied to smart glasses further including a photoelectric conversion device that captures an image of the outside. Smart glasses may display captured external information in real time.

### Eleventh Embodiment

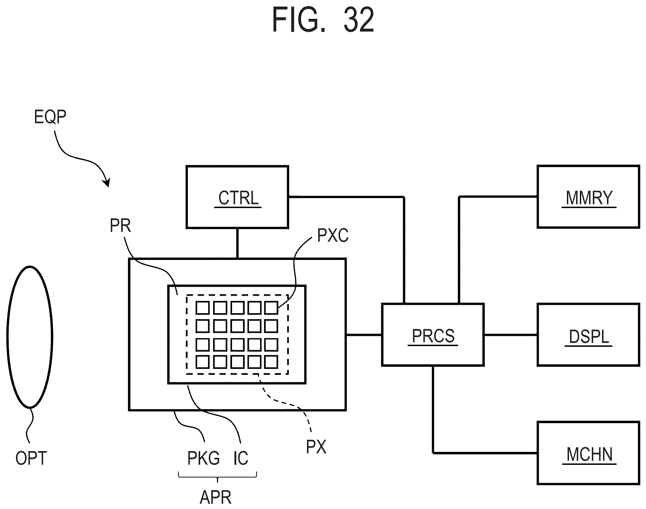

An equipment according to an eleventh embodiment will be described with reference to Fig. 32. Fig. 32 is a block diagram illustrating a schematic configuration of an equipment according to the present embodiment.

Fig. 32 is a schematic diagram illustrating an equipment EQP including a photoelectric conversion device APR. The photoelectric conversion device APR has the function of the photoelectric conversion device 100 according to any one of the first to fifth embodiments. All or part of the photoelectric conversion device APR is a semiconductor device IC. The photoelectric conversion device APR of the present example may be used as, for example, an image sensor, an auto focus (AF) sensor, a photometric sensor, or a distance measurement sensor. The semiconductor device IC includes a pixel region PX in which pixel circuits PXC each including a photoelectric conversion unit are arranged in a matrix. The semiconductor device IC may include a peripheral region PR around the pixel region PX. A circuit other than the pixel circuit may be arranged in the peripheral region PR.

The photoelectric conversion device APR may have a structure (chip stacked structure) in which a first semiconductor chip provided with a plurality of photoelectric conversion units and a second semiconductor chip provided with peripheral circuits are stacked. Each of the peripheral circuits in the second semiconductor chip may be column circuits corresponding to pixel columns of the first semiconductor chip. The peripheral circuits in the second semiconductor chip may be matrix circuits corresponding to pixels or pixel blocks in the first semiconductor chip. As the connections between the first semiconductor chip and the second semiconductor chip, through electrodes (through silicon via (TSV)), inter-chip interconnections by direct bonding of a conductor such as copper, connections by micro bumps between chips, connections by wire bonding, or the like may be employed.

The photoelectric conversion device APR may include a package PKG that accommodates the semiconductor device IC in addition to the semiconductor device IC. The package PKG may include a base body to which the semiconductor device IC is fixed, a lid body such as glass facing the semiconductor device IC, and connection members such as bonding wires or bumps for connecting terminals provided on the base body and terminals provided on the semiconductor device IC.

The equipment EQP may further include at least one of an optical device OPT, a control device CTRL, a processing device PRCS, a display device DSPL, a storage device MMRY, and a mechanical device MCHN. The optical device OPT corresponds to the photoelectric conversion device APR, and is, for example, a lens, a shutter, or a mirror. The control device CTRL controls the photoelectric conversion device APR, and is, for example, a semiconductor device such as an ASIC. The processing device PRCS processes a signal output from the photoelectric conversion device APR and constitutes an analog front end (AFE) or a digital front end (DFE). The processing unit PRCS is a semiconductor device such as a central processing unit (CPU) or an ASIC. The display device DSPL may be an electroluminescent (EL) display device or a liquid crystal display device that displays information (image) obtained by the photoelectric conversion device APR. The storage device MMRY may be a magnetic device or a semiconductor device that stores information (image) obtained by the photoelectric conversion device APR. The storage device MMRY may be a volatile memory such as a static random access memory (SRAM) or a dynamic random access memory (DRAM), or a nonvolatile memory such as a flash memory or a hard disk drive. The mechanical device MCHN may include a movable portion or a propulsion portion such as a motor or an engine. In the equipment EQP, a signal output from the photoelectric conversion device APR is displayed on the display device DSPL or transmitted to the outside by a communication device (not illustrated) included in the equipment EQP. Therefore, it is preferable that the equipment EQP further includes a storage device MMRY and a processing device PRCS separately from the storage circuit unit and the arithmetic circuit unit included in the photoelectric conversion device APR.

The equipment EQP illustrated in Fig. 32 may be an electronic device such as an information terminal (for example, a smartphone or a wearable terminal) having a photographing function or a camera (for example, an interchangeable lens camera, a compact camera, a video camera, and a monitoring camera). The mechanical device MCHN in the camera may drive components of the optical device OPT for zooming, focusing, and shutter operation. The equipment EQP may be a transportation device (movable object) such as a vehicle, a ship, or an airplane. The equipment EQP may be a medical device such as an endoscope or a CT scanner.

The mechanical device MCHN in the transport device may be used as a mobile device. The equipment EQP as a transport device is suitable for transporting the photoelectric conversion device APR, or for assisting and/or automating operation (manipulation) by an imaging function. The processing device PRCS for assisting and/or automating driving (manipulation) may perform processing for operating the mechanical device MCHN as a mobile device based on information obtained by the photoelectric conversion device APR.

The photoelectric conversion device APR according to the present embodiment may provide a high value to a designer, a manufacturer, a seller, a purchaser, and/or a user thereof. Therefore, when the photoelectric conversion device APR is mounted on the equipment EQP, the value of the equipment EQP may also be increased. Therefore, in manufacturing and selling the equipment EQP, it is advantageous to determine the mounting of the photoelectric conversion device APR of the present embodiment on the equipment EQP in order to increase the value of the equipment EQP.

### Modified Embodiments

The present disclosure is not limited to the above-described embodiments, and various modifications are possible.

For example, an example in which a part of the configuration of any of the embodiments is added to another embodiment or an example in which a part of the configurations of any of the embodiments is substituted with some of the configurations of another embodiment is also an embodiment of the present disclosure.

Further, the circuit configuration of the pixel 12 is not limited to the above-described embodiments. For example, a switch such as a transistor may be provided between the photoelectric conversion element 22 and the quenching circuit 31 or between the photoelectric conversion element 22 and the signal processing unit 30 to control the electrical connection state therebetween. Further, a switch such as a transistor may be provided between the node to which the voltage VH is supplied and the quenching circuit 31 and/or between the node to which the voltage VL is supplied and the photoelectric conversion element 22 to control an electrical connection state therebetween.

Further, in the circuit configuration of the pixel 12 of the above-described embodiments, the signal charge (electrons) is taken out from the cathode side with the anode side of the APD as the fixed potential, but the signal charge (holes) may be taken out from the anode side with the cathode side of the APD as the fixed potential.

Further, although the color filters of the RGB array are described in the above-described embodiments, the color filters of the CMY array including a C pixel including a cyan color filter, an M pixel including a magenta color filter, and a Y pixel including a yellow color filter may be used. In addition to the color pixels of RGB, CMY, and the like, a pixel (white pixel) that directly detects incident light without color separation or an IR pixel including an infrared transmission filter having a transmission wavelength range in an infrared wavelength range may be further included. Each pixel 12 does not necessarily need to include a color filter.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. A photoelectric conversion device (100) comprising:
a first photon detection circuit (24A) and a second photon detection circuit (24B) each of which outputs a pulse signal in response to incidence of a photon;
a first counter (34A) configured to count the pulse signal output from the first photon detection circuit (24A);
a second counter (34B) configured to count the pulse signal output from the second photon detection circuit (24B);
a selector (35) connected to the first counter (34A) and the second counter (34B) and configured to sequentially output a first count value of the first counter (34A) and a second count value of the second counter (34B); and
an output circuit (36) connected to the selector (35) and configured to control an output of the first count value and the second count value input from the selector (35) to an output line (16).

2. The photoelectric conversion device according to claim 1,
wherein a first photoelectric conversion unit included in the first photon detection circuit constitutes a first pixel, and
wherein a second photoelectric conversion unit included in the second photon detection circuit constitutes a second pixel.

3. The photoelectric conversion device according to claim 2, wherein the first pixel and the second pixel have sensitivity to different colors.

4. The photoelectric conversion device according to claim 1, wherein the first photoelectric conversion unit included in the first photon detection circuit and the second photoelectric conversion unit included in the second photon detection circuit share one microlens.

5. The photoelectric conversion device according to claim 1, further comprising:
a third photon detection circuit and a fourth photon detection circuit,
wherein a first photoelectric conversion unit included in the first photon detection circuit and a third photoelectric conversion unit included in the third photon detection circuit constitute a first pixel and share a first microlens,
wherein a second photoelectric conversion unit included in the second photon detection circuit and a fourth photoelectric conversion unit included in the fourth photon detection circuit constitute a second pixel and share a second microlens,
wherein each of the first photoelectric conversion unit and the second photoelectric conversion unit is configured such that a photon that has passed through a first pupil region of an optical system that guides photons to the first photoelectric conversion unit, the second photoelectric conversion unit, the third photoelectric conversion unit, and the fourth photoelectric conversion unit is incident, and
wherein each of the third photoelectric conversion unit and the fourth photoelectric conversion unit is configured such that a photon that has passed through a second pupil region of the optical system is incident.

6. The photoelectric conversion device according to claim 5, further comprising:
a third counter configured to count the pulse signal output from the third photon detection circuit;
a fourth counter configured to count the pulse signal output from the fourth photon detection circuit;
a second selector connected to the third counter and the fourth counter and configured to sequentially output a third count value of the third counter and a fourth count value of the fourth counter; and
a second output circuit connected to the second selector and configured to control an output of the third count value and the fourth count value input from the second selector to a second output line.

7. The photoelectric conversion device according to claim 6,
wherein a timing at which the first count value is output to the output line and a timing at which the third count value is output to the second output line are the same, and
wherein a timing at which the second count value is output to the output line and a timing at which the fourth count value is output to the second output line are the same.

8. The photoelectric conversion device according to claim 5,
wherein the first counter is configured to count the pulse signal output from the first photon detection circuit and the third photon detection circuit, and
wherein the second counter is configured to count the pulse signal output from the second photon detection circuit and the fourth photon detection circuit.

9. The photoelectric conversion device according to claim 5,
wherein the first counter is configured to count the pulse signal output from the first photon detection circuit and the third photon detection circuit, and
wherein the second counter is configured to count the pulse signal output from the first photon detection circuit and the second photon detection circuit.

10. The photoelectric conversion device according to claim 9, further comprising:
a third counter configured to count the pulse signal output from the second photon detection circuit and the fourth photon detection circuit; and
a fourth counter configured to count the pulse signal output from the third photon detection circuit and the fourth photon detection circuit.

11. The photoelectric conversion device according to claim 10, further comprising:
a third pixel including a fifth photon detection circuit and a sixth photon detection circuit, wherein a fifth photoelectric conversion unit of the fifth photon detection circuit and a sixth photoelectric conversion unit of the sixth photon detection circuit share a third microlens;
a fourth pixel including a seventh photon detection circuit and an eighth photon detection circuit, wherein a seventh photoelectric conversion unit of the seventh photon detection circuit and an eighth photoelectric conversion unit of the eighth photon detection circuit share a fourth microlens;
a fifth counter configured to count the pulse signal output from the fifth photon detection circuit and the sixth photon detection circuit;
a sixth counter configured to count the pulse signal output from the fifth photon detection circuit and the seventh photon detection circuit;
a seventh counter configured to count the pulse signal output from the seventh photon detection circuit and the eighth photon detection circuit; and
an eighth counter configured to count the pulse signal output from the sixth photon detection circuit and the eighth photon detection circuit,
wherein each of the fifth photoelectric conversion unit and the seventh photoelectric conversion unit is configured such that a photon that has passed through the first pupil region is incident, and
wherein each of the sixth photoelectric conversion unit and the eighth photoelectric conversion unit is configured such that a photon that has passed through the second pupil region is incident.

12. The photoelectric conversion device according to claim 11, further comprising:
a second selector connected to the third counter and the sixth counter and configured to sequentially output a third count value of the third counter and a sixth count value of the sixth counter;
a second output circuit connected to the second selector and configured to control an output of the third count value and the sixth count value input from the second selector to a second output line;
a third selector connected to the fourth counter and the fifth counter and configured to sequentially output a fourth count value of the fourth counter and a fifth count value of the fifth counter;
a third output circuit connected to the third selector and configured to control an output of the fourth count value and the fifth count value input from the third selector to a third output line;
a fourth selector connected to the seventh counter and the eighth counter and configured to sequentially output a seventh count value of the seventh counter and an eighth count value of the eighth counter; and
a fourth output circuit connected to the fourth selector and configured to control an output of the seventh count value and the eighth count value input from the fourth selector to a fourth output line.

13. The photoelectric conversion device according to any one of claims 1 to 12,
wherein the output line extends in a first direction, and
wherein the first counter and the second counter are arranged in the first direction.

14. The photoelectric conversion device according to claim 13, wherein the selector and the output circuit are arranged between the first counter and the second counter.

15. An equipment comprising:
the photoelectric conversion device according to any one of claims 1 to 14; and at least one of
an optical device corresponding to the photoelectric conversion device,
a control device configured to control the photoelectric conversion device,
a processing device configured to process a signal output from the photoelectric conversion device,
a mechanical device that is controlled based on information obtained by the photoelectric conversion device,
a display device configured to display information obtained by the photoelectric conversion device, and
a storage device configured to store information obtained by the photoelectric conversion device.
